(19) Europäisches Patentamt / European Patent Office / Office européen des brevets

(11) **EP 3 689 918 A1**

(12) **EUROPEAN PATENT APPLICATION**
published in accordance with Art. 153(4) EPC

(43) Date of publication:
**05.08.2020 Bulletin 2020/32**

(51) Int Cl.:
***C08F 4/654*** (2006.01)   ***C08F 210/06*** (2006.01)

(21) Application number: **18861839.1**

(22) Date of filing: **10.08.2018**

(86) International application number:
**PCT/JP2018/030103**

(87) International publication number:
**WO 2019/064967 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2017 JP 2017190716**

(71) Applicant: **Toho Titanium CO., LTD.**
**Chigasaki-shi**
**Kanagawa 253-8510 (JP)**

(72) Inventors:
• **HOSAKA Motoki**
**Chigasaki-shi**
**Kanagawa 253-8510 (JP)**
• **SUGANO Toshihiko**
**Chigasaki-shi**
**Kanagawa 253-8510 (JP)**

(74) Representative: **Müller-Boré & Partner**
**Patentanwälte PartG mbB**
**Friedenheimer Brücke 21**
**80639 München (DE)**

(54) **CATALYST FOR OLEFIN POLYMERIZATION, METHOD FOR PRODUCING CATALYST FOR OLEFIN POLYMERIZATION, METHOD FOR PRODUCING OLEFIN POLYMER, AND PROPYLENE- -OLEFIN COPOLYMER**

(57)     Provided is a catalyst for polymerization of an olefin which is excellent in sustained polymerization activity in the polymerization of an α-olefin and is capable of preferably producing an α-olefin (co)polymer having high stereoregularity and MFR and favorable moldability. The present invention provides a catalyst for polymerization of an olefin, comprising: a solid catalyst component containing magnesium, titanium, halogen and an internal electron-donating compound; an organoaluminum compound; and external electron-donating compounds being of two types of alkoxysilane compounds having specific structures represented by the general formula (I) and the general formula (II), respectively, wherein the catalyst for polymerization of an olefin comprises 51 to 99% by mol of the external electron-donating compound represented by the general formula (I) and 1 to 49% by mol of the external electron-donating compound represented by the general formula (II) with respect to the total amount of both the external electron-donating compounds.

EP 3 689 918 A1

**Description**

[Technical Field]

The present invention relates to a catalyst for polymerization of an olefin, a method for producing a catalyst for polymerization of an olefin and a propylene-$\alpha$-olefin copolymer.

[Background Art]

Automobile parts, home electronics, containers, films and the like made of polyolefin are produced by melting a (co)polymer powder obtained by olefin polymerization, pelletizing the melted polymer, and then molding the pellets using various molding machines. This operation, particularly, the production of large molded products by injection molding, may be required to have high flowability (melt flow rate, MFR) of the melted polymer.
Meanwhile, the molded products to be produced are required to have product strength, and furthermore, polymers for large molded product purposes are required to have even molding stability.
Hence, many studies have been made in order to obtain polymers of olefins having high stereoregularity, a molecular weight distribution and high MFR while increasing the MFR of the resulting polymers.
For example, Patent Literature 1 (Japanese Patent Laid-Open No. 3-174112) discloses a method for producing a propylene polymer having very high melt rheology by using a catalyst system for propylene polymerization comprising a solid catalyst component containing magnesium, titanium, halogen and an electron donor as essential components, a promoter component (organometal compound) and an alkyltrialkoxysilane compound (external electron donor).
However, even the invention mentioned above reduces sustained polymerization activity in exchange for high hydrogen response which brings about high MFR, and is therefore still susceptible to improvement in copolymerization performance with a monomer other than propylene, such as ethylene.

[Citation List]

[Patent Literature]

[Patent Literature 1] Japanese Patent Laid-Open No. 3-174112

[Summary of Invention]

[Technical Problem]

Under such circumstances, an object of the present invention is to provide a catalyst for polymerization of an olefin which is excellent in sustained polymerization activity and is capable of preferably producing an $\alpha$-olefin (co)polymer having high stereoregularity and MFR and favorable moldability, and to provide a method for producing the catalyst for polymerization of an olefin, a method for producing a polymer of an olefin and a propylene-$\alpha$-olefin copolymer.

[Solution to Problem]

The present inventors have conducted diligent studies to solve the technical problems described above and consequently found that the technical problems can be solved by a catalyst for polymerization of an olefin containing two types of alkoxysilane compounds having specific structures at specific quantitative ratios. On the basis of the finding, the present invention has been completed.
Specifically, the present invention provides:

(1) a catalyst for polymerization of an olefin, comprising:

a solid catalyst component containing magnesium, titanium, halogen and an internal electron-donating compound;
an organoaluminum compound;
an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms; and an external electron-donating compound represented by the following general formula (II):

$$(R^3R^4N)_n(R^5HN)_p SiR^6_q(OR^7)_r \qquad (II)$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; n + p + q + r = 4; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other, wherein the catalyst for polymerization of an olefin comprises 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II);

(2) a method for producing a catalyst for polymerization of an olefin according to (1), comprising contacting a solid catalyst component containing magnesium, titanium, halogen and an internal electron-donating compound, an organoaluminum compound, an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms, and an external electron-donating compound represented by the following general formula (II):

$$(R^3R^4N)_n(R^5HN)_p SiR^6_q(OR^7)_r \qquad (II)$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; n + p + q + r = 4; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other, with each other so as to attain 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II);

(3) a method for producing a polymer of an olefin, comprising copolymerizing propylene and α-olefin other than propylene in the presence of the catalyst for polymerization of an olefin according to (1); and

(4) a propylene-α-olefin copolymer being a product of copolymerization reaction of propylene and α-olefin other than propylene in the presence of the catalyst for polymerization of an olefin according to (1).

[Advantageous Effects of Invention]

The present invention can provide a catalyst for polymerization of an olefin which is excellent in sustained polymerization activity in the polymerization of an α-olefin and is capable of preferably producing an α-olefin (co)polymer having high stereoregularity and MFR and favorable moldability, and can provide a method for producing the catalyst for polymerization of an olefin, a method for producing a polymer of an olefin and a propylene-$\alpha$-olefin copolymer.

[Description of Embodiments]

First, the catalyst for polymerization of an olefin according to the present invention will be described.

The catalyst for polymerization of an olefin according to the present invention comprises:

a solid catalyst component containing magnesium, titanium, halogen and an internal electron-donating compound;
an organoaluminum compound;
an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms (hereinafter, also referred to as a first external electron-donating compound); and
an external electron-donating compound represented by the following general formula (II):

$$(R^3R^4N)_n(R^5HN)_pSiR^6{}_q(OR^7)_r \qquad (II)$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; n + p + q + r = 4; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other (hereinafter, also referred to as a second external electron-donating compound), wherein the catalyst for polymerization of an olefin comprises 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II).

(External electron-donating compound)

The catalyst for polymerization of an olefin according to the present invention comprises an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms.

In the catalyst for polymerization of an olefin according to the present invention, the $R^1$ group in the alkoxysilane compound represented by the general formula (I) is a linear or branched alkyl group having 6 to 12 carbon atoms or a cycloalkyl group having 6 to 12 carbon atoms.

In the catalyst for polymerization of an olefin according to the present invention, when the $R^1$ group is a linear alkyl group, the linear alkyl group is preferably a linear alkyl group having 6 to 11 carbon atoms, more preferably a linear alkyl group having 6 to 10 carbon atoms, further preferably a linear alkyl group having 6 to 9 carbon atoms.

In the catalyst for polymerization of an olefin according to the present invention, when the $R^1$ group is a branched alkyl group, the branched alkyl group is preferably a branched alkyl group having 6 to 11 carbon atoms, more preferably a branched alkyl group having 6 to 10 carbon atoms, further preferably a branched alkyl group having 6 to 9 carbon atoms.

In the catalyst for polymerization of an olefin according to the present invention, when the $R^1$ group is a cycloalkyl group, the cycloalkyl group is preferably a cycloalkyl group having 6 to 11 carbon atoms, more preferably a cycloalkyl group having 6 to 10 carbon atoms, further preferably a cycloalkyl group having 6 to 9 carbon atoms.

The $R^1$ group is preferably a linear alkyl group or a branched alkyl group having the number of carbon atoms described above, more preferably a linear alkyl group.

In the catalyst for polymerization of an olefin according to the present invention, the $R^2$ group in the alkoxysilane compound represented by the general formula (I) is a linear alkyl group having 2 to 4 carbon atoms, preferably an ethyl group or a propyl group.

In the catalyst for polymerization of an olefin according to the present invention, examples of the alkoxysilane compound represented by the general formula (I) can include n-hexyltriethoxysilane, n-heptyltriethoxysilane and n-octyltriethoxysilane.

One or two or more compounds can be appropriately selected from these compounds as the alkoxysilane compound represented by the general formula (I).

The catalyst for polymerization of an olefin according to the present invention comprises 51 to 99% by mol, preferably 55 to 99% by mol, more preferably 60 to 99% by mol, further preferably 75 to 99% by mol, of the external electron-donating compound represented by the general formula (I) with respect to the total amount of the external electron-donating compound represented by the general formula (I) and the external electron-donating compound represented by the general formula (II) mentioned later.

The catalyst for polymerization of an olefin according to the present invention comprising the external electron-donating compound represented by the general formula (I) at the ratio described above can easily obtain highly sustained copolymerization activity and can also easily exert excellent technical effects of attaining high MFR and block ratio of the resulting polymer, and a high EPR content in a copolymer when ethylene and propylene are polymerized.

The catalyst for polymerization of an olefin according to the present invention comprises an external electron-donating compound represented by the following general formula (II):

$$(R^3R^4N)_n(R^5HN)_pSiR^6{}_q(OR^7)_r \qquad \text{(II)}$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; n + p + q + r = 4; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other.

In the catalyst for polymerization of an olefin according to the present invention, the $R^3$, $R^4$ and $R^5$ groups in the alkoxysilane compound represented by the general formula (II) are each a linear alkyl group having 1 to 12 carbon atoms, a branched alkyl group having 3 to 12 carbon atoms or a cycloalkyl group having 3 to 12 carbon atoms.

When the $R^3$, $R^4$ or $R^5$ group in the alkoxysilane compound represented by the general formula (II) is a linear alkyl group, the linear alkyl group is preferably a linear alkyl group having 1 to 10 carbon atoms, more preferably a linear alkyl group having 1 to 6 carbon atoms, further preferably a linear alkyl group having 2 to 4 carbon atoms.

When the $R^3$, $R^4$ or $R^5$ group in the alkoxysilane compound represented by the general formula (II) is a branched alkyl group, the branched alkyl group is preferably a branched alkyl group having 3 to 9 carbon atoms, more preferably a branched alkyl group having 3 to 6 carbon atoms.

When the $R^3$, $R^4$ or $R^5$ group in the alkoxysilane compound represented by the general formula (II) is a cycloalkyl group, the cycloalkyl group is preferably a cycloalkyl group having 3 to 10 carbon atoms, more preferably a cycloalkyl group having 4 to 8 carbon atoms, further preferably a cycloalkyl group having 4 to 6 carbon atoms.

Specific examples of the $R^3$, $R^4$ or $R^5$ group can include a methyl group, an ethyl group, a n-propyl group, an isopropyl group, a n-butyl group, a sec-butyl group, a t-butyl group, a n-pentyl group, an isopentyl group, a cyclopentyl group, a n-hexyl group, an isohexyl group, a cyclohexyl group, a n-heptyl group, an isoheptyl group, a n-octyl group, and an isooctyl group.

In the alkoxysilane compound represented by the general formula (II), the $R^3$, $R^4$ and $R^5$ groups are the same as or different from each other.

In the catalyst for polymerization of an olefin according to the present invention, the $R^6$ group in the alkoxysilane compound represented by the general formula (II) is a linear alkyl group having 1 to 10 carbon atoms, a branched alkyl group having 3 to 10 carbon atoms or a cycloalkyl group having 3 to 12 carbon atoms.

When the $R^6$ group in the alkoxysilane compound represented by the general formula (II) is a linear alkyl group, the linear alkyl group is preferably a linear alkyl group having 1 to 8 carbon atoms, more preferably a linear alkyl group having 1 to 7 carbon atoms, further preferably a linear alkyl group having 1 to 6 carbon atoms.

When the $R^6$ group in the alkoxysilane compound represented by the general formula (II) is a branched alkyl group, the branched alkyl group is preferably a branched alkyl group having 3 to 10 carbon atoms, more preferably a branched alkyl group having 3 to 8 carbon atoms.

When the $R^6$ group in the alkoxysilane compound represented by the general formula (II) is a cycloalkyl group, the cycloalkyl group is preferably a cycloalkyl group having 4 to 10 carbon atoms, more preferably a cycloalkyl group having 4 to 6 carbon atoms, further preferably a cycloalkyl group having 5 to 6 carbon atoms.

As mentioned later, when a plurality of $R^6$ groups are present, these $R^6$ groups are the same as or different from each other. The total number of carbon atoms in the plurality of $R^6$ groups is preferably 5 or more, preferably 5 to 15, more preferably 5 to 12, further preferably 5 to 10.

In the catalyst for polymerization of an olefin according to the present invention, the $R^7$ group in the alkoxysilane compound represented by the general formula (II) is a methyl group or an ethyl group.

In the catalyst for polymerization of an olefin according to the present invention, n in the alkoxysilane compound represented by the general formula (II) is a real number of 0 to 2, preferably 0 or 2, more preferably 0.

In the catalyst for polymerization of an olefin according to the present invention, p in the alkoxysilane compound represented by the general formula (II) is a real number of 0 to 2, preferably 0 or 2, more preferably 0.

In the catalyst for polymerization of an olefin according to the present invention, q in the alkoxysilane compound represented by the general formula (II) is a real number of 0 to 3, preferably a real number of 1 to 3, more preferably a real number of 2 to 3, specifically preferably 2.

In the catalyst for polymerization of an olefin according to the present invention, r in the alkoxysilane compound represented by the general formula (II) is a real number of 0 to 4, preferably a real number of 1 to 3, more preferably a real number of 2 to 3, specifically preferably 2.

In the catalyst for polymerization of an olefin according to the present invention, the total of n, p, q and r (n + p + q + r) in the alkoxysilane compound represented by the general formula (II) is 4.

In the catalyst for polymerization of an olefin according to the present invention, when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other, in the alkoxysilane compound represented by the general formula (II).

In the catalyst for polymerization of an olefin according to the present invention, examples of the alkoxysilane compound represented by the general formula (II) can include cyclohexylmethyldimethoxysilane, dicyclopentyldimethoxysilane, t-butylmethyldimethoxysilane and diisopropyldimethoxysilane.

One or two or more compounds can be appropriately selected from these compounds as the alkoxysilane compound represented by the general formula (II).

The catalyst for polymerization of an olefin according to the present invention comprises 1 to 49% by mol, preferably 1 to 45% by mol, more preferably 1 to 40% by mol, further preferably 1 to 25% by mol, of the external electron-donating compound represented by the general formula (II) with respect to the total amount of the external electron-donating compound represented by the general formula (I) and the external electron-donating compound represented by the general formula (II) mentioned later.

The catalyst for polymerization of an olefin according to the present invention comprising the external electron-donating compound represented by the general formula (II) at the ratio described above can easily exert excellent technical effects of attaining high stereoregularity, MFR and block ratio as well as a wide molecular weight distribution of the resulting polymer, and a high EPR content in a copolymer when ethylene and propylene are polymerized.

The catalyst for polymerization of an olefin according to the present invention containing the specific external electron-donating compounds represented by the general formula (I) and the general formula (II) at the specific ratios is excellent in sustained polymerization activity in the polymerization of an α-olefin and can preferably produce an α-olefin (co)polymer having high stereoregularity and MFR and favorable moldability.

(Solid catalyst component)

The solid catalyst component for polymerization of an olefin of the present invention comprises a solid catalyst component containing magnesium, titanium, halogen and an internal electron-donating compound.

Examples of the solid catalyst component for polymerization of an olefin containing magnesium, titanium, halogen and an internal electron-donating compound can include a contact reaction product of a magnesium compound, a tetravalent titanium halogen compound, and an internal electron-donating compound.

Examples of the magnesium compound can include one or more compounds selected from dialkoxy magnesium, magnesium dihalide and alkoxy magnesium halide.

Among these magnesium compounds, dialkoxy magnesium or magnesium dihalide is preferred. Specific examples thereof include dimethoxy magnesium, diethoxy magnesium, dipropoxy magnesium, dibutoxy magnesium, ethoxymethoxy magnesium, ethoxypropoxy magnesium, butoxyethoxy magnesium, magnesium dichloride, magnesium dibromide, and magnesium diiodide. Diethoxy magnesium or magnesium dichloride is particularly preferred.

Among these magnesium compounds, dialkoxy magnesium may be obtained by reacting metal magnesium with an alcohol in the presence of halogen, a halogen-containing metal compound or the like.

The dialkoxy magnesium is preferably in a granule form or a powder form, and its shape that may be used is indefinite or spherical.

In the case of using spherical dialkoxy magnesium, a polymer powder having a more favorable particle shape and having a (more spherical) narrow particle size distribution is obtained. The handleability of the polymer powder formed at the time of polymerization operation is improved, and occlusion, etc. attributed to a fine powder contained in the formed polymer powder can be prevented.

The spherical dialkoxy magnesium is not necessarily required to be truly spherical in shape, and dialkoxy magnesium having an oval shape or a potato shape may be used. Specifically, the degree of circularity of the particles is preferably 3 or less, more preferably 1 to 2, further preferably 1 to 1.5.

In the present application, the degree of circularity of the dialkoxy magnesium particles means an arithmetic average value determined by photographing 500 or more dialkoxy magnesium particles under a scanning electron microscope, processing the photographed particles with image analysis processing software to determine area S and perimeter L of each particle, and calculating the degree of circularity of each dialkoxy magnesium particle according to the following expression:

$$\text{Degree of circularity of the dialkoxy magnesium particle} = L^2 / (4\pi \times S).$$

A shape of the particle closer to a true circle indicates a value of the degree of circularity closer to 1.

The average particle size of the dialkoxy magnesium is preferably 1 to 200 $\mu$m, more preferably 5 to 150 $\mu$m, in terms of average particle size D50 (particle size which is 50% of an integral particle size in a volume-integrated particle size distribution) when measured using a laser light scattering/diffraction particle size analyzer.

The average particle size of the spherical dialkoxy magnesium is preferably 1 to 100 $\mu$m, more preferably 5 to 60 $\mu$m, further preferably 10 to 50 $\mu$m.

For the particle size of the dialkoxy magnesium, it is preferred that the dialkoxy magnesium should have a narrow particle size distribution with fewer numbers of a fine powder and a coarse powder.

Specifically, the dialkoxy magnesium preferably contains 20% or less, more preferably 10% or less, of 5 $\mu$m or smaller particles measured using a laser light scattering/diffraction particle size analyzer. On the other hand, the dialkoxy magnesium preferably contains 10% or less, more preferably 5% or less, of 100 $\mu$m or larger particles measured using a laser light scattering/diffraction particle size analyzer.

The particle size distribution thereof, represented by ln (D90/D10) (wherein D90 represents a particle size which is 90% of the integral particle size in the volume-integrated particle size distribution, and D10 represents a particle size which is 10% of the integral particle size in the volume-integrated particle size distribution) is preferably 3 or less, more preferably 2 or less.

A method for producing the spherical dialkoxy magnesium is illustrated in, for example, Japanese Patent Laid-Open Nos. 58-41832, 62-51633, 3-74341, 4-368391, and 8-73388.

The magnesium compound is preferably in a solution state or a suspension state during reaction. Such a solution state or a suspension state can allow the reaction to proceed preferably.

The magnesium compound, when being solid, can be prepared into a magnesium compound solution by dissolving the magnesium compound in a solvent having the ability to solubilize the magnesium compound, or can be prepared into a magnesium compound suspension by suspending the magnesium compound in a solvent having no ability to solubilize the magnesium compound.

The magnesium compound in a liquid state may be used directly as a magnesium compound solution, or may be used as a magnesium compound solution by further dissolving the liquid magnesium compound in a solvent having the ability to solubilize the magnesium compound.

Examples of the compound capable of solubilizing the solid magnesium compound include at least one compound selected from the group consisting of an alcohol, an ether and an ester. An alcohol such as ethanol, propanol, butanol, or 2-ethylhexanol is preferred, and 2-ethylhexanol is particularly preferred.

On the other hand, examples of the vehicle having no ability to solubilize the solid magnesium compound include one or more solvents selected from a saturated hydrocarbon solvent and an unsaturated hydrocarbon solvent that does not dissolve the magnesium compound.

The tetravalent titanium halogen compound constituting the solid catalyst component is not particularly limited and is preferably one or more compounds selected from the titanium halide and alkoxy titanium halide groups represented by the following general formula (III):

$$Ti(OR^8)_rX_{4-r} \qquad (III)$$

wherein $R^8$ represents an alkyl group having 1 to 4 carbon atoms; X represents a halogen atom such as a chlorine atom, a bromine atom, or an iodine atom; and r is 0 or an integer of 1 to 3.

Examples of the titanium halide include titanium tetrahalide such as titanium tetrachloride, titanium tetrabromide, and titanium tetraiodide.

Examples of the alkoxy titanium halide include one or more compounds selected from methoxy titanium trichloride, ethoxy titanium trichloride, propoxy titanium trichloride, n-butoxy titanium trichloride, dimethoxy titanium dichloride, diethoxy titanium dichloride, dipropoxy titanium dichloride, di-n-butoxy titanium dichloride, trimethoxy titanium chloride, triethoxy titanium chloride, tripropoxy titanium chloride, and tri-n-butoxy titanium chloride.

The tetravalent titanium halogen compound is preferably titanium tetrahalide, more preferably titanium tetrachloride.

These titanium compounds may be used singly or in combinations of two or more thereof.

The internal electron-donating compound constituting the solid catalyst component is not particularly limited and is preferably an organic compound containing an oxygen atom or a nitrogen atom. Examples thereof can include one or more compounds selected from alcohols, phenols, ethers, esters, ketones, acid halides, aldehydes, amines, amides, nitriles, isocyanates, and organosilicon compounds containing a Si-O-C bond or a Si-N-C bond.

The internal electron-donating compound is more preferably one or more compounds selected from ether compounds such as monoethers, diethers, and ether carbonates, and esters such as monocarboxylic acid esters and polycarboxylic acid esters, further preferably one or more compounds selected from aromatic polycarboxylic acid esters such as aromatic dicarboxylic acid diester, aliphatic polycarboxylic acid esters, alicyclic polycarboxylic acid esters, diethers, and ether carbonates.

In the catalyst for polymerization of an olefin of the present invention, examples of the aromatic dicarboxylic acid diester can include a compound represented by the following general formula (IV):

$$(R^9)_jC_6H_{4-j}(COOR^{10})(COOK^{11}) \qquad (IV)$$

wherein $R^9$ represents an alkyl group having 1 to 8 carbon atoms or a halogen atom; $R^{10}$ and $R^{11}$ are the same or different and are each an alkyl group having 1 to 12 carbon atoms; number j of the substituent $R^9$ is 0, 1 or 2; and when j is 2, the $R^9$ groups are the same or different.

In the aromatic dicarboxylic acid diester represented by the general formula (IV), $R^9$ is a halogen atom or an alkyl group having 1 to 8 carbon atoms.

When $R^9$ is a halogen atom, examples of the halogen atom include one or more atoms selected from a fluorine atom, a chlorine atom, a bromine atom, and an iodine atom.

When $R^9$ is an alkyl group having 1 to 8 carbon atoms, examples of the alkyl group having 1 to 8 carbon atoms include one or more groups selected from a methyl group, an ethyl group, a n-propyl group, an isopropyl group, a n-butyl group, an isobutyl group, a t-butyl group, a n-pentyl group, an isopentyl group, a neopentyl group, a n-hexyl group, an isohexyl group, a 2,2-dimethylbutyl group, a 2,2-dimethylpentyl group, an isooctyl group, and a 2,2-dimethylhexyl group.

$R^9$ is preferably a methyl group, a bromine atom, or a fluorine atom, more preferably a methyl group or a bromine atom.

In the aromatic dicarboxylic acid diester represented by the general formula (IV), each of $R^{10}$ and $R^{11}$ is an alkyl group having 1 to 12 carbon atoms, and $R^{10}$ and $R^{11}$ are the same as or different from each other.

Examples of the alkyl group having 1 to 12 carbon atoms can include an ethyl group, a n-butyl group, an isobutyl group, a t-butyl group, a neopentyl group, an isohexyl group, and an isooctyl group. An ethyl group, a n-propyl group, a n-butyl group, an isobutyl group, or a neopentyl group is preferred.

In the aromatic dicarboxylic acid diester represented by the general formula (IV), the number j of the substituent $R^9$ is 0, 1 or 2, and when j is 2, the $R^9$ groups (two $R^9$ groups) are the same or different.

When j is 0, the compound represented by the general formula (IV) is phthalic acid diester. When j is 1 or 2, the compound represented by the general formula (IV) is substituted phthalic acid diester.

When j is 1, $R^9$ in the aromatic dicarboxylic acid diester represented by the general formula (IV) preferably substitutes a hydrogen atom at position 3, 4 or 5 of the benzene ring.

When j is 2, $R^9$ in the aromatic dicarboxylic acid diester represented by the general formula (IV) preferably substitutes hydrogen atoms at positions 4 and 5 of the benzene ring.

Specific examples of the aromatic dicarboxylic acid diester represented by the general formula (IV) include: phthalate diesters such as dimethyl phthalate, diethyl phthalate, di-n-propyl phthalate, diisopropyl phthalate, di-n-butyl phthalate, diisobutyl phthalate, di-n-pentyl phthalate, diisopentyl phthalate, dineopentyl phthalate, di-n-hexyl phthalate, dihexyl phthalate, methylethyl phthalate, (ethyl)n-propyl phthalate, ethylisopropyl phthalate, (ethyl)n-butyl phthalate, ethylisobutyl phthalate, (ethyl)n-pentyl phthalate, ethylisopentyl phthalate, ethylneopentyl phthalate, and (ethyl)n-hexyl phthalate; halogen-substituted phthalic acid diesters such as diethyl 4-chlorophthalate, di-n-propyl 4-chlorophthalate, diisopropyl 4-chlorophthalate, di-n-butyl 4-chlorophthalate, diisobutyl 4-chlorophthalate, diethyl 4-bromophthalate, di-n-propyl 4-bromophthalate, diisopropyl 4-bromophthalate, di-n-butyl 4-bromophthalate, and diisobutyl 4-bromophthalate; and alkyl-substituted phthalic acid diesters such as diethyl 4-methylphthalate, di-n-propyl 4-methylphthalate, diisopropyl 4-methylphthalate, di-n-butyl 4-methylphthalate, and diisobutyl 4-methylphthalate.

In the case of using aliphatic polycarboxylic acid esters as the internal electron-donating compound, examples of the aliphatic polycarboxylic acid esters can include saturated aliphatic polycarboxylic acid ester and unsaturated aliphatic polycarboxylic acid ester.

Examples of the saturated aliphatic polycarboxylic acid ester include malonic acid diesters, succinic acid diesters, fumaric acid diesters, adipic acid diesters, and glutaric acid diesters. One or two or more compounds selected from malonic acid diester, alkyl-substituted malonic acid diester, alkylene-substituted malonic acid diester, and succinic acid diester are more preferred.

Examples of the unsaturated aliphatic polycarboxylic acid ester can include maleic acid diester. One or two or more compounds selected from maleic acid diester and alkyl-substituted maleic acid diester are more preferred.

In the case of using succinic acid diester as the internal electron-donating compound, examples of the succinic acid diester include diethyl succinate, dibutyl succinate, diethyl methylsuccinate, and diethyl 2,3-diisopropylsuccinate. Diethyl succinate or diethyl 2,3-diisopropylsuccinate is preferred.

In the case of using maleic acid diester as the internal electron-donating compound, examples of the maleic acid diester can include diethyl maleate, di-n-propyl maleate, diisopropyl maleate, di-n-butyl maleate, diisobutyl maleate, di-n-pentyl maleate, dineopentyl maleate, dihexyl maleate, and dioctyl maleate. Among them, diethyl maleate, di-n-butyl maleate, or diisobutyl maleate is preferred.

In the case of using alkyl-substituted maleic acid diester as the internal electron-donating compound, examples of the alkyl-substituted maleic acid diester can include diethyl isopropylbromomaleate, diethyl butylbromomaleate, diethyl isobutylbromomaleate, diethyl diisopropylmaleate, diethyl dibutylmaleate, diethyl diisobutylmaleate, diethyl diisopentylmaleate, diethyl isopropylisobutylmaleate, dimethyl isopropylisopentylmaleate, diethyl (3-chloro-n-propyl)maleate, diethyl bis(3-bromo-n-propyl)maleate, dibutyl dimethylmaleate, and dibutyl diethylmaleate. Among them, dibutyl dimethylmaleate, dibutyl diethylmaleate, or diethyl diisobutylmaleate is preferred.

In the case of using malonic acid diester as the internal electron-donating compound, examples of the malonic acid diester include dimethyl malonate, diethyl malonate, di-n-propyl malonate, diisopropyl malonate, din-butyl malonate, diisobutyl malonate, and dineopentyl malonate. Among them, dimethyl malonate, diethyl malonate or diisobutyl malonate is preferred.

The internal electron-donating compound is preferably substituted malonic acid diester.

In the case of using substituted malonic acid diester as the internal electron-donating compound, examples of the substituted malonic acid diester include alkyl-substituted malonic acid diester, halogen-substituted malonic acid diester, and alkyl halide-substituted malonic acid diester. Among them, alkyl-substituted malonic acid diester or halogen-substituted malonic acid diester is preferred, and alkyl-substituted malonic acid diester is more preferred.

The alkyl-substituted malonic acid diester is preferably dialkylmalonic acid diester or alkylidenemalonic acid diester, more preferably dialkylmalonic acid diester such as dimethyl ethylcyclopentylmalonate, diethyl ethylcyclopentylmalonate, dimethyl diisobutylmalonate, or diethyl diisobutylmalonate, or alkylidenemalonic acid diester such as dimethyl benzylidenemalonate or diethyl benzylidenemalonate.

Examples of the alicyclic polycarboxylic acid ester include saturated alicyclic polycarboxylic acid ester and unsaturated alicyclic polycarboxylic acid ester. Specific examples thereof include cycloalkanedicarboxylic acid diester and cycloalkenedicarboxylic acid diester.

In the case of using cycloalkanedicarboxylic acid diester as the internal electron-donating compound, examples of the cycloalkanedicarboxylic acid diester include cyclopentane-1,2-dicarboxylic acid diester, cyclopentane-1,3-dicarboxylic acid diester, cyclohexane-1,2-dicarboxylic acid diester, cyclohexane-1,3-dicarboxylic acid diester, cycloheptane-1,2-dicarboxylic acid diester, cycloheptane-1,2-dicarboxylic acid diester, cyclooctane-1,2-dicarboxylic acid diester, cyclooctane-1,3-dicarboxylic acid diester, cyclononane-1,2-dicarboxylic acid diester, cyclononane-1,3-dicarboxylic acid diester, cyclodecane-1,2-dicarboxylic acid diester, and cyclodecane-1,3-dicarboxylic acid diester.

In the case of using diethers as the internal electron-donating compound, compounds represented by the following general formula (V):

$$R^{12}{}_k H_{(3-k)} C\text{-}O\text{-}(CR^{13}R^{14})_m\text{-}O\text{-}CR^{15}{}_n H_{(3-n)} \qquad (V)$$

wherein $R^{12}$ and $R^{15}$ are the same as or different from each other and are each a halogen atom or an organic group having 1 to 20 carbon atoms; $R^{13}$ and $R^{14}$ are the same as or different from each other and are each a hydrogen atom, an oxygen atom, a sulfur atom, a halogen atom or an organic group having 1 to 20 carbon atoms, wherein the organic group having 1 to 20 carbon atoms optionally contains at least one atom selected from an oxygen atom, a fluorine atom, a chlorine atom, a bromine atom, an iodine atom, a nitrogen atom, a sulfur atom, a phosphorus atom, and a boron atom, and when a plurality of organic groups having 1 to 20 carbon atoms are present, the plurality of organic groups are optionally bonded to each other to form a ring; k is an integer of 0 to 3, wherein when k is an integer of 2 or larger, a plurality of $R^{12}$ groups are the same as or different from each other; m is an integer of 1 to 10, wherein when m is an integer of 2 or larger, a plurality of $R^{13}$ and $R^{14}$ groups are the same as or different from each other; and n is an integer of 0 to 3, wherein n is an integer of 2 or larger, a plurality of $R^{15}$ groups are the same as or different from each other can be used as the diethers.

In the compound represented by the general formula (V), examples of the halogen atom represented by $R^{12}$ or $R^{15}$ include a fluorine atom, a chlorine atom, a bromine atom and an iodine atom. A fluorine atom, a chlorine atom or a bromine atom is preferred.

Examples of the organic group having 1 to 20 carbon atoms, represented by $R^{12}$ or $R^{15}$ include a methyl group, an ethyl group, an isopropyl group, an isobutyl group, a n-propyl group, a n-butyl group, a t-butyl group, a hexyl group, an octyl group, a cyclopentyl group, a cyclohexyl group, and a phenyl group. A methyl group or an ethyl group is preferred.

When a plurality of organic groups having 1 to 20 carbon atoms are present in the compound represented by the general formula (V), the plurality of organic groups are optionally bonded to each other to form a ring. In this case, examples of the plurality of organic groups constituting the ring can include combinations of (1) $R^{12}$ groups (when k is 2 or larger), (2) $R^{15}$ groups (when n is 2 or larger), (3) $R^{12}$ groups (when m is 2 or larger), (4) $R^{14}$ groups (when m is 2 or larger), (5) $R^{12}$ and $R^{13}$, (6) $R^{12}$ and $R^{14}$, (7) $R^{12}$ and $R^{15}$, (8) $R^{13}$ and $R^{14}$, (9) $R^{13}$ and $R^{15}$, and (10) $R^{14}$ and $R^{15}$. Among them, a combination of (8) $R^{13}$ and $R^{14}$ is preferred, and $R^{13}$ and $R^{14}$ are more preferably bonded to each other to form a fluorene ring or the like.

Specific examples of the compound represented by the general formula (V) include one or more compounds selected from 2,2-diisobutyl-1,3-dimethoxypropane, 2-isopropyl-2-isobutyl-1,3-dimethoxypropane, 2-isopropyl-2-isopentyl-1,3-dimethoxypropane, 3,3-bis(methoxymethyl)-2,6-dimethylheptane, and 9,9-bis(methoxymethyl)fluorene. One or more compounds selected from 2,2-diisobutyl-1,3-dimethoxypropane, 2-isopropyl-2-isopentyl-1,3-dimethoxypropane, 3,3-bis(methoxymethyl)-2,6-dimethylheptane, and 9,9-bis(methoxymethyl)fluorene are preferred, and one or more compounds selected from 2-isopropyl-2-isobutyl-1,3-dimethoxypropane, 2-isopropyl-2-isopentyl-1,3-dimethoxypropane, and 9,9-bis(methoxymethyl)fluorene are more preferred.

In the compound represented by the general formula (V), k is an integer of 0 to 3, preferably an integer of 0 to 2, more preferably 0 or 1. When k is an integer of 2 or larger, a plurality of $R^{12}$ groups are the same as or different from each other.

In the compound represented by the general formula (V), m is an integer of 1 to 10, preferably an integer of 1 to 8, more preferably 1 to 6. When m is an integer of 2 or larger, a plurality of $R^{13}$ and $R^{14}$ groups are the same as or different from each other.

In the compound represented by the general formula (V), n is an integer of 0 to 3, preferably an integer of 0 to 2, more preferably 0 or 1. When n is an integer of 2 or larger, a plurality of $R^{15}$ groups are the same as or different from each other.

In the case of using ether carbonates as the internal electron-donating compound, compounds represented by the following general formula (VI):

$$R^{16}\text{-O-C(=O)-O-Z-OR}^{17} \qquad \text{(VI)}$$

wherein $R^{16}$ and $R^{17}$ are the same or different and each represent a linear alkyl group having 1 to 20 carbon atoms, a branched alkyl group having 3 to 20 carbon atoms, a vinyl group, a linear alkenyl group or branched alkenyl group having 3 to 20 carbon atoms, a linear halogen-substituted alkyl group having 1 to 20 carbon atoms, a branched halogen-substituted alkyl group having 3 to 20 carbon atoms, a linear halogen-substituted alkenyl group having 2 to 20 carbon atoms, a branched halogen-substituted alkenyl group having 3 to 20 carbon atoms, a cycloalkyl group having 3 to 20 carbon atoms, a cycloalkenyl group having 3 to 20 carbon atoms, a halogen-substituted cycloalkyl group having 3 to 20 carbon atoms, a halogen-substituted cycloalkenyl group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 2 to 24 carbon atoms and having a carbon atom at a bonding end (except for a group having a C=N group at a bonding end), an oxygen atom-containing hydrocarbon group having 2 to 24 carbon atoms and having a carbon atom at a bonding end (except for a group having a carbonyl group at a bonding end), or a phosphorus-containing hydrocarbon group having 2 to 24 carbon atoms and having a carbon atom at a bonding end (except for a group having a C=P group at a bonding end); and Z represents a linking group forming a linkage via a carbon atom or a carbon chain can be used as the ether carbonates.

In the compound represented by the general formula (VI), examples of the linear alkyl group having 1 to 20 carbon atoms, represented by $R^{16}$ or $R^{17}$ include a methyl group, an ethyl group, a n-propyl group, a n-butyl group, a n-pentyl group, a n-hexyl group, a n-pentyl group, a n-octyl group, a n-nonyl group, and a n-decyl group and preferably include linear alkyl groups having 1 to 12 carbon atoms.

Examples of the branched alkyl group having 3 to 20 carbon atoms, represented by $R^{16}$ or $R^{17}$ include alkyl groups having secondary carbon or tertiary carbon, such as an isopropyl group, an isobutyl group, a t-butyl group, an isopentyl group, and a neopentyl group and preferably include branched alkyl groups having 3 to 12 carbon atoms.

Examples of the linear alkenyl group having 3 to 20 carbon atoms, represented by $R^{16}$ or $R^{17}$ include an allyl group, a 3-butenyl group, a 4-hexenyl group, a 5-hexenyl group, a 7-octenyl group, and a 10-dodecenyl group and preferably include linear alkenyl groups having 3 to 12 carbon atoms.

Examples of the branched alkenyl group having 3 to 20 carbon atoms, represented by $R^{16}$ or $R^{17}$ include an isopropenyl group, an isobutenyl group, an isopentenyl group, and a 2-ethyl-3-hexenyl group and preferably include branched alkenyl groups having 3 to 12 carbon atoms.

Examples of the linear halogen-substituted alkyl group having 1 to 20 carbon atoms, represented by $R^{16}$ or $R^{17}$ include a methyl halide group, an ethyl halide group, a n-propyl halide group, a n-butyl halide group, a n-pentyl halide group, a n-hexyl halide group, a n-pentyl halide group, a n-octyl halide group, a nonyl halide group, a decyl halide group, a halogen-substituted undecyl group, and a halogen-substituted dodecyl group and preferably include linear halogen-substituted alkyl groups having 1 to 12 carbon atoms.

Examples of the branched halogen-substituted alkyl group having 3 to 20 carbon atoms, represented by $R^{16}$ or $R^{17}$ include an isopropyl halide group, an isobutyl halide group, a 2-ethylhexyl halide group, and a neopentyl halide group and preferably include branched halogen-substituted alkyl groups having 3 to 12 carbon atoms.

Examples of the linear halogen-substituted alkenyl group having 2 to 20 carbon atoms, represented by $R^{16}$ or $R^{17}$ include a vinyl 2-halide group, an allyl 3-halide group, a 2-butenyl 3-halide group, a 3-butenyl 4-halide group, a 2-butenyl perhalide group, a 4-hexenyl 6-halide group, and a methyl-2-propenyl 3-trihalide group and preferably include halogen-substituted alkenyl groups having 2 to 12 carbon atoms.

Examples of the branched halogen-substituted alkenyl group having 3 to 20 carbon atoms, represented by $R^{16}$ or $R^{17}$ include a 2-butenyl 3-trihalide group, a ethyl-3-hexenyl 2-pentahalide group, a 3-ethyl-4-hexenyl 6-halide group, and a isobutenyl 3-halide group and preferably include branched halogen-substituted alkenyl groups having 3 to 12 carbon atoms.

Examples of the cycloalkyl group having 3 to 20 carbon atoms, represented by $R^{16}$ or $R^{17}$ include a cyclopropyl group, a cyclobutyl group, a cyclopentyl group, a tetramethylcyclopentyl group, a cyclohexyl group, a methylcyclohexyl group, a cycloheptyl group, a cyclooctyl group, a cyclononyl group, a cyclodecyl group, and a butylcyclopentyl group and preferably include cycloalkyl groups having 3 to 12 carbon atoms.

Examples of the cycloalkenyl group having 3 to 20 carbon atoms, represented by $R^{16}$ or $R^{17}$ include a cyclo-propenyl group, a cyclopentenyl group, a cyclohexenyl group, a cyclooctenyl group, and a norbornene group and preferably include cycloalkenyl groups having 3 to 12 carbon atoms.

Examples of the halogen-substituted cycloalkyl group having 3 to 20 carbon atoms, represented by $R^{16}$ or $R^{17}$ include a halogen-substituted cyclopropyl group, a halogen-substituted cyclobutyl group, a halogen-substituted cyclopentyl group, a halogen-substituted trimethylcyclopentyl group, a halogen-substituted cyclohexyl group, a halogen-substituted methylcyclohexyl group, a halogen-substituted cycloheptyl group, a halogen-substituted cyclooctyl group, a halogen-substituted cyclononyl group, a halogen-substituted cyclodecyl group, and a halogen-substituted butylcyclopentyl group and preferably include halogen-substituted cycloalkyl groups having 3 to 12 carbon atoms.

Examples of the halogen-substituted cycloalkenyl group having 3 to 20 carbon atoms, represented by $R^{16}$ or $R^{17}$ include a halogen-substituted cyclopropenyl group, a halogen-substituted cyclobutenyl group, a halogen-substituted cyclopentenyl group, a halogen-substituted trimethylcyclopentenyl group, a halogen-substituted cyclohexenyl group, a halogen-substituted methylcyclohexenyl group, a halogen-substituted cycloheptenyl group, a halogen-substituted cyclooctenyl group, a halogen-substituted cyclononenyl group, a halogen-substituted cyclodecenyl group, and a halogen-substituted butylcyclopentenyl group and preferably include halogen-substituted cycloalkenyl groups having 3 to 12 carbon atoms.

Examples of the aromatic hydrocarbon group having 6 to 24 carbon atoms, represented by $R^{16}$ or $R^{17}$ include a phenyl group, a methylphenyl group, a dimethylphenyl group, an ethylphenyl group, a benzyl group, a 1-phenylethyl group, a 2-phenylethyl group, a 2-phenylpropyl group, a 1-phenylbutyl group, a 4-phenylbutyl group, a 2-phenylheptyl group, a tolyl group, a xylyl group, a naphthyl group, and a 1,8-dimethylnaphthyl group and preferably include aromatic hydrocarbon groups having 6 to 12 carbon atoms.

Examples of the halogen-substituted aromatic hydrocarbon group having 6 to 24 carbon atoms, represented by $R^{16}$ or $R^{17}$ include a phenyl halide group, a methylphenyl halide group, a methylphenyl trihalide group, a benzyl perhalide group, a phenyl perhalide group, an ethyl 2-phenyl-2-halide group, a naphthyl perhalide group, and a butyl 4-phenyl-2,3-dihalide group and preferably include halogen-substituted aromatic hydrocarbon groups having 6 to 12 carbon atoms.

When $R^{16}$ or $R^{17}$ in the compound represented by the general formula (VI) is a group containing a halogen atom, examples of the halogen atom include a fluorine atom, a chlorine atom, a bromine atom and an iodine atom and preferably include a fluorine atom, a chlorine atom and a bromine atom.

Examples of the phosphorus-containing hydrocarbon group having 2 to 24 carbon atoms and having a carbon atom at a bonding end (except for a group having a C=P group at a bonding end), represented by $R^{16}$ or $R^{17}$ include: dialkylphosphinoalkyl groups such as a dimethylphosphine methyl group, a dibutylphosphinomethyl group, a dicyclohexylphosphinomethyl group, a dimethylphosphine ethyl group, a dibutylphosphinoethyl group, and a dicyclohexylphosphinoethyl group; diarylphosphinoalkyl groups such as a diphenylphosphinomethyl group and ditolylphosphinomethyl group; and phosphino group-substituted aryl groups such as a dimethylphosphinophenyl group and a diethylphosphinophenyl group and preferably include phosphorus-containing hydrocarbon groups having 2 to 12 carbon atoms.

The bonding end of $R^{16}$ or $R^{17}$ means a terminal atom or group on the oxygen atom side bonded to $R^{16}$ or $R^{17}$ in the compound represented by the general formula (VI).

$R^{16}$ is preferably a linear alkyl group having 1 to 12 carbon atoms, a branched alkyl group having 3 to 12 carbon atoms, a vinyl group, a linear alkenyl group or branched alkenyl group having 3 to 12 carbon atoms, a linear halogen-substituted alkyl group having 1 to 12 carbon atoms, a branched halogen-substituted alkyl group having 3 to 12 carbon atoms, a linear halogen-substituted alkenyl group or branched halogen-substituted alkenyl group having 3 to 12 carbon atoms, a cycloalkyl group having 3 to 12 carbon atoms, a cycloalkenyl group having 3 to 12 carbon atoms, a halogen-substituted cycloalkyl group having 3 to 12 carbon atoms, a halogen-substituted cycloalkenyl group having 3 to 12 carbon atoms, or an aromatic hydrocarbon group having 6 to 12 carbon atoms,

more preferably a linear alkyl group having 1 to 12 carbon atoms, a branched alkyl group having 3 to 12 carbon atoms, a vinyl group, a linear alkenyl group or branched alkenyl group having 3 to 12 carbon atoms, a linear halogen-substituted alkyl group having 1 to 12 carbon atoms, a branched halogen-substituted alkyl group having 3 to 12 carbon atoms, a cycloalkyl group having 3 to 12 carbon atoms, a cycloalkenyl group having 3 to 12 carbon atoms, or an aromatic hydrocarbon group having 6 to 12 carbon atoms, and

further preferably a linear alkyl group having 1 to 12 carbon atoms, a branched alkyl group having 3 to 12 carbon atoms, or an aromatic hydrocarbon group having 6 to 12 carbon atoms.

$R^{17}$ is preferably a linear alkyl group having 1 to 12 carbon atoms, a branched alkyl group having 3 to 12 carbon atoms and having $-CH_2-$ at a bonding end, a branched alkenyl group having 3 to 12 carbon atoms and having $-CH_2-$ at a bonding end, a linear halogen-substituted alkyl group having 1 to 12 carbon atoms and having $-CH_2-$ at a bonding end, a branched halogen-substituted alkyl group having 3 to 12 carbon atoms and having $-CH_2-$ at a bonding end, a branched halogen-substituted alkenyl group having 3 to 12 carbon atoms and having $-CH_2-$ at a bonding end, a cycloalkyl group having 4 to 12 carbon atoms and having $-CH_2-$ at a bonding end, a cycloalkenyl group having 4 to 12 carbon atoms and having $-CH_2-$ at a bonding end, a halogen-substituted cycloalkyl group having 4 to 12 carbon atoms and having $-CH_2-$ at a bonding end, a halogen-substituted cycloalkenyl group having 4 to 12 carbon atoms and having $-CH_2-$ at a bonding end, or an aromatic hydrocarbon group having 7 to 12 carbon atoms and having $-CH_2-$ at a bonding end, more preferably a linear hydrocarbon group having 1 to 12 carbon atoms, a branched alkyl group having 3 to 12 carbon atoms and having $-CH_2-$ at a bonding end, or an aromatic hydrocarbon group having 7 to 12 carbon atoms and having $-CH_2-$ at a bonding end.

The bonding end of $R^{17}$ means an end at the oxygen atom side bonded to $R^{17}$ in the compound represented by the general formula (VI).

Examples of the combination of $R^{16}$ and $R^{17}$ can include combinations of the aforementioned respective preferred examples of the groups and preferably include combinations of the respective more preferred examples thereof.

In the compound represented by the general formula (VI), Z is a linking group forming a linkage via a carbon atom or a carbon chain, which is a divalent linking group that links the carbonate group to the ether group ($OR^{17}$ group). Examples thereof can include a linking group that links, via a carbon chain, the two oxygen atoms bonded to Z. A linking group having the carbon chain composed of two carbon atoms is preferred.

Z is preferably a linear alkylene group having 1 to 20 carbon atoms, a branched alkylene group having 3 to 20 carbon atoms, a vinylene group, a linear alkenylene group or branched alkenylene group having 3 to 20 carbon atoms, a linear halogen-substituted alkylene group having 1 to 20 carbon atoms, a branched halogen-substituted alkylene group having 3 to 20 carbon atoms, a linear halogen-substituted alkenylene group or branched halogen-substituted alkenylene group having 3 to 20 carbon atoms, a cycloalkylene group having 3 to 20 carbon atoms, a cycloalkenylene group having 3 to 20 carbon atoms, a halogen-substituted cycloalkylene group having 3 to 20 carbon atoms, a halogen-substituted cycloalkenylene group having 3 to 20 carbon atoms, an aromatic hydrocarbon group having 6 to 24 carbon atoms, a halogen-substituted aromatic hydrocarbon group having 6 to 24 carbon atoms, a nitrogen atom-containing hydrocarbon group having 1 to 24 carbon atoms, an oxygen atom-containing hydrocarbon group having 1 to 24 carbon atoms, or a phosphorus-containing hydrocarbon group having 1 to 24 carbon atoms.

Z is more preferably an ethylene group having 2 carbon atoms, a branched alkylene group having 3 to 12 carbon atoms, a vinylene group, a linear alkenylene group or branched alkenylene group having 3 to 12 carbon atoms, a linear halogen-substituted alkylene group having 2 to 12 carbon atoms, a branched halogen-substituted alkylene group having 3 to 12 carbon atoms, a linear halogen-substituted alkenylene group or branched halogen-substituted alkenylene group having 3 to 12 carbon atoms, a cycloalkylene group having 3 to 12 carbon atoms, a cycloalkenylene group having 3 to 12 carbon atoms, a halogen-substituted cycloalkylene group having 3 to 12 carbon atoms, a halogen-substituted cycloalkenylene group having 3 to 12 carbon atoms, an aromatic hydrocarbon group having 6 to 12 carbon atoms, a halogen-substituted aromatic hydrocarbon group having 6 to 12 carbon atoms, a nitrogen atom-containing hydrocarbon group having 2 to 12 carbon atoms, an oxygen atom-containing hydrocarbon group having 2 to 12 carbon atoms, or a phosphorus-containing hydrocarbon group having 2 to 12 carbon atoms, particularly preferably a bidentate linking group selected from an ethylene group having 2 carbon atoms and a branched alkylene group having 3 to 12 carbon atoms. The bidentate linking group means a linking group that links, via a carbon chain, the two oxygen atoms bonded to Z, wherein the carbon chain is composed of two carbon atoms.

Examples of the linear alkylene group having 1 to 20 carbon atoms, represented by Z include an ethylene group, a trimethylene group, a tetramethylene group, a pentamethylene group, a hexamethylene group, a heptamethylene group, an octamethylene group, a nonamethylene group, a decamethylene group, an undecamethylene group, a dodecamethylene group, a tridecamethylene group, and a tetradecamethylene group and preferably include linear alkylene groups having 2 to 12 carbon atoms, more preferably an ethylene group.

Examples of the branched alkylene group having 3 to 20 carbon atoms, represented by Z include a 1-methylethylene group, a 2-methyltrimethylene group, a 2-methyltetramethylene group, a 2-methylpentamethylene group, a 3-methylhexamethylene group, a 4-methylheptamethylene group, a 4-methyloctamethylene group, a 5-methylnonamethylene group, a 5-methyldecamethylene group, a 6-methylundecamethylene group, a 7-methyldodecamethylene group, and a 7-methyltridecamethylene group and preferably include branched alkylene groups having 3 to 12 carbon atoms, more preferably a 1-methylethylene group, a 2-methylethylene group, and a 1-ethylethylene group.

Examples of the linear alkenylene group having 3 to 20 carbon atoms, represented by Z include a propenylene group, a butenylene group, a hexenylene group, an octenylene group, and an octadecenylene group and preferably include linear alkenylene groups having 3 to 12 carbon atoms.

Examples of the branched alkenylene group having 3 to 20 carbon atoms, represented by Z include an isopropenylene group, a 1-ethylethenylene group, a 2-methylpropenylene group, a 2,2-dimethylbutenylene group, a 3-methyl-2-butenylene group, a 3-ethyl-2-butenylene group, a 2-methyloctenylene group, and a 2,4-dimethyl-2-butenylene group and preferably include branched alkenylene groups having 3 to 12 carbon atoms and having an ethenylene group as a connecting moiety, more preferably an isopropenylene group and a 1-ethylethenylene group.

Examples of the linear halogen-substituted alkylene group having 1 to 20 carbon atoms, represented by Z include a dichloromethylene group, a chloromethylene group, a dichloromethylene group, and a tetrachloroethylene group and preferably include linear halogen-substituted alkylene groups having 3 to 12 carbon atoms, more preferably a chloroethylene group, a fluoroethylene group, a dichloroethylene group, a difluoroethylene group, and a tetrafluoroethylene group.

Examples of the branched halogen-substituted alkylene group having 1 to 20 carbon atoms, represented by Z include a 1,2-bischloromethylethylene group, a 2,2-bis(chloromethyl)propylene group, a 1,2-bisdichloromethylethylene group, a 1,2-bis(trichloromethyl)ethylene group, a 2,2-dichloropropylene group, a 1,1,2,2-tetrachloroethylene group, a 1-trifluoromethylethylene group, and a 1-pentafluorophenylethylene group and preferably include branched halogen-substituted alkylene groups having 3 to 12 carbon atoms, more preferably a 1-chloroethylethylene group, a 1-trifluoromethylethylene group, and a 1,2-bis(chloromethyl)ethylene group.

Examples of the linear halogen-substituted alkenylene group having 1 to 20 carbon atoms, represented by Z include a dichloroethenylene group, a difluoroethenylene group, a 3,3-dichloropropenylene group, and a 1,2-difluoropropenylene group and preferably include linear halogen-substituted alkenylene groups having 3 to 12 carbon atoms, more preferably a dichloroethenylene group and a difluoroethenylene group.

Examples of the branched halogen-substituted alkylene group having 1 to 20 carbon atoms, represented by Z include a 3,4-dichloro-1,2-butylene group, a 2,2-dichloro-1,3-butylene group, and a 1,2-difluoro-1,2-propylene group and preferably include branched halogen-substituted alkylene groups having 3 to 12 carbon atoms, more preferably a chloromethylethenylene group, a trifluoromethylethenylene group, and a 3,4-dichloro-1,2-butenylene group.

Examples of the cycloalkylene group having 3 to 20 carbon atoms, represented by Z include a cyclopentylene group, a cyclohexylene group, a cyclopropylene group, a 2-methylcyclopropylene group, a cyclobutylene group, a 2,2-dimethylcyclobutylene group, a 2,3-dimethylcyclopentylene group, a 1,3,3-trimethylcyclohexylene group, and a cyclooctylene group and preferably include cycloalkylene groups having 3 to 12 carbon atoms, more preferably a 1,2-cycloalkylene group and a hydrocarbon group-substituted 1,2-cycloalkylene group.

Examples of the cycloalkenylene group having 3 to 20 carbon atoms, represented by Z include a cyclopentenylene group, a 2,4-cyclopentadienylene group, a cyclohexenylene group, a 1,4-cyclohexadienylene group, a cycloheptenylene group, a methylcyclopentenylene group, a methylcyclohexenylene group, a methylcycloheptenylene group, a dicyclodecylene group, and a tricyclodecylene group and preferably include cycloalkenylene groups having 3 to 12 carbon atoms, more preferably a 1,2-cycloalkenylene group and a hydrocarbon group-substituted 1,2-cycloalkenylene group.

Examples of the halogen-substituted cycloalkylene group having 3 to 20 carbon atoms, represented by Z include a 3-chloro-1,2-cyclopentylene group, a 3,4,5,6-tetrachloro-1,2-cyclohexylene group, a 3,3-dichloro-1,2-cyclopropylene group, a 2-chloromethylcyclopropylene group, a 3,4-dichloro-1,2-cyclobutylene group, a 3,3-bis(dichloromethyl)-1,2-cyclobutylene group, a 2,3-bis(dichloromethyl)cyclopentylene group, a 1,3,3-tris(fluoromethyl)-1,2-cyclohexylene group, and a 3-trichloromethyl-1,2-cyclooctylene group and preferably include halogen-substituted cycloalkylene groups having 3 to 12 carbon atoms.

Examples of the halogen-substituted cycloalkenylene group having 3 to 20 carbon atoms, represented by Z include a 5-chloro-1,2-cyclo-4-hexenylene group and a 3,3,4,4-tetrafluoro-1,2-cyclo-6-octenylene group and preferably include halogen-substituted cycloalkenylene groups having 3 to 12 carbon atoms.

Examples of the aromatic hydrocarbon group having 6 to 24 carbon atoms, represented by Z include 1,2-phenylene, 3-methyl-1,2-phenylene, 3,6-dimethyl-1,2-phenylene, 1,2-naphthylene, 2,3-naphthylene, 5-methyl-1,2-naphthylene, 9,10-phenanthrylene, and 1,2-anthracenylene and preferably include aromatic hydrocarbon groups having 6 to 12 carbon atoms.

Examples of the halogen-substituted aromatic hydrocarbon group having 6 to 24 carbon atoms, represented by Z include 3-chloro-1,2-phenylene, 3-chloromethyl-1,2-phenylene, 3,6-dichloro-1,2-phenylene, 3,6-dichloro-4,5-dimethyl-1,2-phenylene, 3-chloro-1,2-naphthylene, 3-fluoro-1,2-naphthylene, 3,6-dichloro-1,2-phenylene, 3,6-difluoro-1,2-phenylene, 3,6-dibromo-1,2-phenylene, 1-chloro-2,3-naphthylene, 5-chloro-1,2-naphthylene, 2,6-dichloro-9,10-phenanthrylene, 5,6-dichloro-1,2-anthracenylene, and 5,6-difluoro-1,2-anthracenylene and preferably include halogen-substituted aromatic hydrocarbon groups having 6 to 12 carbon atoms.

Examples of the nitrogen atom-containing hydrocarbon group having 1 to 24 carbon atoms, represented by Z include a 1-dimethylaminoethylene group, a 1,2-bisdimethylaminoethylene group, a 1-diethylaminoethylene group, a 2-diethylamino-1,3-propylene group, a 2-ethylamino-1,3-propylene group, a 4-dimethylamino-1,2-phenylene group, and a 4,5-bis(dimethylamino)phenylene group and preferably include nitrogen atom-containing hydrocarbon groups having 2 to 12 carbon atoms.

Examples of the oxygen atom-containing hydrocarbon group having 1 to 24 carbon atoms, represented by Z include a 1-methoxyethylene group, a 2,2-dimethoxy-1,3-propanylene group, a 2-ethoxy-1,3-propanylene group, a 2-t-butoxy-1,3-propanylene group, a 2,3-dimethoxy-2,3-butylene group, and a 4-methoxy-1,2-phenylene group and preferably include oxygen atom-containing hydrocarbon groups having 2 to 12 carbon atoms.

Examples of the phosphorus-containing hydrocarbon group having 1 to 24 carbon atoms, represented by Z include a 1-dimethylphosphinoethylene group, a 2,2-bis(dimethylphosphino)-1,3-propanylene group, a 2-diethylphosphino-1,3-propanylene group, a 2-t-butoxymethylphosphino-1,3-propanylene group, a 2,3-bis(diphenylphosphino)-2,3-butylene group, and a 4-methylphosphate-1,2-phenylene group and preferably include phosphorus-containing hydrocarbon groups having 1 to 12 carbon atoms.

When Z is a cyclic group such as a cycloalkylene group, a cycloalkenylene group, a halogen-substituted cycloalkylene group, a halogen-substituted cycloalkenylene group, an aromatic hydrocarbon group or a halogen-substituted aromatic hydrocarbon group, the linking group that links, via a carbon chain, the two oxygen atoms bonded to Z, wherein the carbon chain is composed of two carbon atoms, means that two adjacent carbon chains in the carbon chain constituting the cyclic form form the carbon chain between the two oxygen atoms bonded to Z.

As a specific example, the compound represented by the general formula (V) is particularly preferably (2-ethoxyethyl)methyl carbonate, (2-ethoxyethyl)ethyl carbonate, or (2-ethoxyethyl)phenyl carbonate.

The internal electron-donating compound is particularly preferably one or more compounds selected from di-n-butyl phthalate, di-n-propyl phthalate, diethyl phthalate, diethyl maleate, dibutyl maleate, dibutyl dimethylmaleate, dibutyl diethylmaleate, diethyl diisobutylmaleate, diethyl succinate, diethyl methylsuccinate, diethyl 2,3-diisopropylsuccinate, di-n-butyl malonate, diethyl malonate, dimethyl diisobutylmalonate, diethyl diisobutylmalonate, 2-isopropyl-2-isobutyl-1,3-dimethoxypropane, 2-isopropyl-2-isopentyl-1,3-dimethoxypropane, 9,9-bis(methoxymethyl)fluorene, (2-ethoxyethyl)ethyl carbonate, (2-ethoxyethyl)phenyl carbonate, dimethyl benzylidenemalonate, diethyl benzylidenemalonate and dibutyl benzylidenemalonate.

The solid catalyst component is a contact reaction product of the magnesium compound, the tetravalent titanium halogen compound and the internal electron-donating compound.

The contact and reaction among the magnesium compound, the tetravalent titanium halogen compound and the internal electron-donating compound may be performed in the presence of a third component polysiloxane.

The polysiloxane is a polymer having a siloxane bond (-Si-O- bond) in the backbone. The polysiloxane, also generally called silicone oil, means chain, partially hydrogenated, cyclic or modified polysiloxane that is liquid or viscous at ordinary temperature and has a viscosity of 0.02 to 100 $cm^2/s$ (2 to 10000 cSt), more preferably 0.03 to 5 $cm^2/s$ (3 to 500 cSt), at 25°C.

Examples of the chain polysiloxane include: hexamethyldisiloxane, hexaethyldisiloxane, hexapropyldisiloxane, hexaphenyldisiloxane 1,3-divinyltetramethyldisiloxane, 1,3-dichlorotetramethyldisiloxane, 1,3-dibromotetramethyldisiloxane, chloromethylpentamethyldisiloxane, and 1,3-bis(chloromethyl)tetramethyldisiloxane as disiloxane; and dimethylpolysiloxane and methylphenylpolysiloxane as polysiloxane other than disiloxane. Examples of the partially hydrogenated polysiloxane include methyl hydrogen polysiloxane having a hydrogenation rate of 10 to 80%. Examples of the cyclic polysiloxane include hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane. Examples of the modified polysiloxane include higher fatty acid group-substituted dimethylsiloxane, epoxy group-substituted dimethylsiloxane, and polyoxyalkylene group-substituted dimethylsiloxane. Among them, decamethylcyclopentasiloxane or dimethylpolysiloxane is preferred, and decamethylcyclopentasiloxane is particularly preferred.

The treatment for the contact and reaction among the magnesium compound, the tetravalent titanium halogen compound, and the internal electron-donating compound (and optionally polysiloxane) is preferably performed in the presence of an inert organic solvent.

The inert organic solvent is preferably an organic solvent that is liquid at ordinary temperature (20°C) and has a boiling point of 50 to 150°C, more preferably an aromatic hydrocarbon compound or a saturated hydrocarbon compound that is liquid at ordinary temperature and has a boiling point of 50 to 150°C.

Specific examples of the inert organic solvent include one or more compounds selected from: linear aliphatic hydrocarbon compounds such as hexane, heptane, and decane; branched aliphatic hydrocarbon compounds such as methylheptane; alicyclic hydrocarbon compounds such as cyclohexane, methylcyclohexane, and ethylcyclohexane; and aromatic hydrocarbon compounds such as toluene, xylene, and ethylbenzene.

Among these inert organic solvents, an aromatic hydrocarbon compound that is liquid at ordinary temperature and has a boiling point of 50 to 150°C is preferred because the aromatic hydrocarbon compound can improve the activity of the resulting solid catalyst component and improve the stereoregularity of the resulting polymer.

The magnesium compound, the tetravalent titanium halogen compound and the internal electron-donating compound can be contacted and reacted by appropriate mixing in the presence of the inert organic solvent.

The temperature during the reaction is preferably 0 to 130°C, more preferably 40 to 130°C, further preferably 30 to 120°C, still further preferably 80 to 120°C. The reaction time is preferably 1 minute or longer, more preferably 10 minutes or longer, further preferably 30 minutes to 6 hours, still further preferably 30 minutes to 5 hours, even further preferably 1 to 4 hours.

Prior to the reaction, low-temperature aging may be carried out.

The low-temperature aging is preliminary reaction of contacting the components at a temperature lower than the temperature during the reaction. The temperature during the low-temperature aging is preferably -20 to 70°C, more preferably -10 to 60°C, further preferably -10 to 30°C. The low-temperature aging time is preferably 1 minute to 6 hours, more preferably 5 minutes to 4 hours, further preferably 30 minutes to 3 hours.

For the contact and reaction among the magnesium compound, the tetravalent titanium halogen compound and the internal electron-donating compound, the amount of the tetravalent titanium halogen compound used with respect to 1 mol of the magnesium compound is preferably 0.5 to 100 mol, more preferably 1 to 50 mol, further preferably 1 to 10 mol.

For the contact and reaction among the magnesium compound, the tetravalent titanium halogen compound and the internal electron-donating compound, the amount of the internal electron-donating compound used with respect to 1 mol of the magnesium compound is preferably 0.01 to 10 mol, more preferably 0.01 to 1 mol, further preferably 0.02 to 0.6 mol.

In the case of using an inert organic solvent, the amount of the inert organic solvent used is preferably 0.001 to 500 mol, more preferably 0.5 to 100 mol, further preferably 1.0 to 20 mol, with respect to 1 mol of the magnesium compound.

The contact among the components is preferably performed with stirring in a container equipped with a stirrer under conditions free of moisture, etc. in an inert gas atmosphere.

After the completion of the reaction, the reaction product is preferably prepared into a wet state (slurry state) by leaving the reaction solution standing and appropriately removing a supernatant, or further prepared into a dry state by hot-air drying or the like, followed by washing treatment.

After the completion of the reaction, the reaction solution is left standing, and a supernatant is appropriately removed. Then, the obtained reaction product is subjected to washing treatment.

The washing treatment is usually performed using a washing solution.

Examples of the washing solution can include the same as the inert organic solvent described above. One or more compounds selected from: linear aliphatic hydrocarbon compounds that are liquid at ordinary temperature and have a boiling point of 50 to 150°C, such as hexane, heptane, and decane; cyclic aliphatic hydrocarbon compounds that are liquid at ordinary temperature and have a boiling point of 50 to 150°C, such as methylcyclohexane and ethylcyclohexane; aromatic hydrocarbon compounds that are liquid at ordinary temperature and have a boiling point of 50 to 150°C, such as toluene, xylene, ethylbenzene, and o-dichlorobenzene; and the like are preferred.

Use of the washing solution can facilitate dissolving and removing by-products or impurities from the reaction product.

The washing treatment is preferably performed at a temperature of 0 to 120°C, more preferably at a temperature of 0 to 110°C, further preferably at a temperature of 30 to 110°C, still further preferably at a temperature of 50 to 110°C, even further preferably at a temperature of 50 to 100°C.

The washing treatment is preferably performed by adding a desired amount of the washing solution to the reaction product, stirring the mixture, and then removing the liquid phase by a filtration method or a decantation method.

As mentioned later, when the number of washes is plural times (two or more times), the reaction product may be subjected directly to reaction of a next step without removing the washing solution finally added to the reaction product.

After the contact and reaction of the components, impurities of unreacted starting material components or reaction by-products (alkoxy titanium halide, titanium tetrachloride-carboxylic acid complex, etc.) remaining in the reaction product can be removed by the washing treatment.

After the washing treatment, aftertreatment may be appropriately carried out.

In the case of carrying out the aftertreatment, examples thereof can include a mode of further contacting a tetravalent titanium halogen compound with the reaction product obtained after the completion of the reaction or the washed product obtained after the washing treatment, and a mode of washing the product thus further contacted with the tetravalent titanium halogen compound. The washing in the aftertreatment can be performed in the same way as in the aforementioned washing of the reaction product.

The contact reaction product of the components is usually in a suspension state. The product in a suspension state can be prepared into a wet state (slurry state) by leaving the suspension standing and removing a supernatant, or further dried by hot-air drying or the like to obtain the solid catalyst component.

In the solid catalyst component, the content of a magnesium atom is preferably 10 to 70% by mass, more preferably 10 to 50% by mass, further preferably 15 to 40% by mass, particularly preferably 15 to 25% by mass.

In the solid catalyst component, the content of a titanium atom is preferably 0.5 to 8.0% by mass, more preferably 0.5 to 5.0% by mass, further preferably 0.5 to 3.5% by mass.

In the solid catalyst component, the content of a halogen atom is preferably 20 to 88% by mass, more preferably 30 to 85% by mass, further preferably 40 to 80% by mass, still further preferably 45 to 75% by mass.

In the catalyst for polymerization of an olefin according to the present invention, the content ratio of the internal electron-donating compound is preferably 1.5 to 30% by mass, more preferably 3.0 to 25% by mass, further preferably 6.0 to 25% by mass.

In the present application, the content of the magnesium atom in the solid catalyst component means a value measured by an EDTA titration method which involves dissolving the solid catalyst component in a hydrochloric acid solution and titrating the magnesium atom with an EDTA solution.

In the present application, the content of the titanium atom in the solid catalyst component means a value measured in accordance with a method (redox titration) described in JIS 8311-1997 "Method for determination of titanium in titanium ores".

In the present application, the content of the halogen atom in the solid catalyst component means a value measured by a silver nitrate titration method which involves treating the solid catalyst component with a mixed solution of sulfuric acid and pure water to prepare an aqueous solution, then sampling a predetermined amount, and titrating the halogen atom with a silver nitrate standard solution.

In the present application, the content of the internal electron-donating compound in the solid catalyst component means results determined using a calibration curve measured in advance on the basis of known concentrations when a sample is measured under the following conditions using gas chromatography (manufactured by Shimadzu Corp., GC-14B).

<Measurement conditions>

Column: packed column ($\phi$2.6 × 2.1 m, Silicone SE-30 10%, Chromosorb WAWDMCS 80/100, manufactured by GL Sciences Inc.)
Detector: FID (flame ionization detector)
Carrier gas: helium, flow rate of 40 ml/min
Measurement temperature: vaporizing chamber: 280°C, column: 225°C, detector: 280°C, or vaporizing chamber: 265°C, column: 180°C, detector: 265°C

(Organoaluminum compound)

The catalyst for polymerization of an olefin according to the present invention comprises an organoaluminum compound in addition to the alkoxysilane compound represented by the general formula (I), the alkoxysilane compound represented by the general formula (II), and the solid catalyst component containing magnesium, titanium, halogen and an internal electron-donating compound.

Examples of the organoaluminum compound can include an organoaluminum compound represented by the following general formula (VII):

$$R^{18}pAlQ_{3-p} \qquad (VII)$$

wherein $R^{18}$ is an alkyl group having 1 to 6 carbon atoms; Q is a hydrogen atom or a halogen atom; and p is a real number of $0 < p \leq 3$.

In the organoaluminum compound represented by the general formula (VII), $R^{18}$ is an alkyl group having 1 to 6 carbon atoms. Specific examples thereof can include a methyl group, an ethyl group, a n-propyl group, an isopropyl group, a n-butyl group, and an isobutyl group.

In the organoaluminum compound represented by the general formula (VII), Q represents a hydrogen atom or a halogen atom. Examples of the halogen atom represented by Q can include a fluorine atom, a chlorine atom, a bromine atom, and an iodine atom.

Specific examples of the organoaluminum compound represented by the general formula (VII) can include one or more compounds selected from triethyl aluminum, diethyl aluminum chloride, triisobutyl aluminum, diethyl aluminum bromide, and diethyl aluminum hydride. Triethyl aluminum or triisobutyl aluminum is preferred.

The catalyst for polymerization of an olefin according to the present invention may comprise a compound other than the alkoxysilane compound represented by the general formula (I) and the alkoxysilane compound represented by the general formula (II) as an external electron-donating compound.

Examples of such an external electron-donating compound include organic compounds containing an oxygen atom or a nitrogen atom and specifically include alcohols, phenols, ethers, esters, ketones, acid halides, aldehydes, amines, amides, nitriles, isocyanates, and organosilicon compounds, particularly, organosilicon compounds containing a Si-O-C bond.

Among these external electron-donating compounds, esters such as ethyl benzoate, ethyl p-methoxybenzoate, ethyl p-ethoxybenzoate, methyl p-toluate, ethyl p-toluate, methyl anisate, and ethyl anisate, 1,3-diethers, or an organosilicon compound containing a Si-O-C bond is preferred, and an organosilicon compound containing a Si-O-C bond is particularly preferred.

In the catalyst for polymerization of an olefin according to the present invention, the content ratios of the solid catalyst component, the organoaluminum compound, and the alkoxysilane compound represented by the general formula (I) and the alkoxysilane compound represented by the general formula (II) can be arbitrarily selected within ranges that produce the effect of the present invention, and are not particularly limited.

The catalyst for polymerization of an olefin according to the present invention comprises preferably 1 to 2000 mol, more preferably 50 to 1000 mol, of the organoaluminum compound per mol of a titanium atom in the solid catalyst component.

The catalyst for polymerization of an olefin according to the present invention comprises preferably 1 to 200 mol, more preferably 2 to 150 mol, further preferably 5 to 100 mol, in total of the alkoxysilane compound represented by the general formula (I) and the alkoxysilane compound represented by the general formula (II) per mol of a titanium atom in the solid catalyst component contained in the catalyst for polymerization of an olefin.

The catalyst for polymerization of an olefin according to the present invention comprises preferably 0.001 to 10 mol, more preferably 0.002 to 2 mol, further preferably 0.002 to 0.5 mol, in total of the alkoxysilane compound represented by the general formula (I) and the alkoxysilane compound represented by the general formula (II) per mol of the organoaluminum compound contained in the catalyst for polymerization of an olefin.

The present invention can provide a catalyst for polymerization of an olefin which is excellent in sustained polymerization activity in the polymerization of an $\alpha$-olefin and is capable of preferably producing an $\alpha$-olefin (co)polymer having high stereoregularity and MFR and favorable moldability.

Next, the method for producing the catalyst for polymerization of an olefin according to the present invention will be described.

The method for producing the catalyst for polymerization of an olefin according to the present invention is a method for producing the catalyst for polymerization of an olefin of the present invention, comprising contacting
a solid catalyst component containing magnesium, titanium, halogen and an internal electron-donating compound,
an organoaluminum compound,
an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms, and
an external electron-donating compound represented by the following general formula (II):

$$(R^3R^4N)_n(R^5HN)_pSiR^6_q(OR^7)_r \qquad (II)$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; n + p + q + r = 4; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other,
with each other so as to attain 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II).

In the method for producing the catalyst for polymerization of an olefin according to the present invention, the detailed solid catalyst component containing magnesium, titanium, halogen and an internal electron-donating compound, the detailed organoaluminum compound, and the detailed alkoxysilane compound represented by the general formula (I) and alkoxysilane compound represented by the general formula (II) are the same as the contents mentioned above.

The contact ratio of each component is preferably an amount corresponding to the content ratio of the component constituting the catalyst for polymerization of an olefin mentioned above.

In the method for producing the catalyst for polymerization of an olefin according to the present invention, the order in which these components are contacted is arbitrary. Examples thereof can include the following orders of contact:

(i) (α) the solid catalyst component → (γ) the external electron-donating compounds including the alkoxysilane compound represented by the general formula (I) and the alkoxysilane compound represented by the general formula (II) → (β) the organoaluminum compound;

(ii) (β) the organoaluminum compound → (γ) the external electron-donating compounds including the alkoxysilane compound represented by the general formula (I) and the alkoxysilane compound represented by the general formula (II) → (α) the solid catalyst component;

(iii) (γ) the external electron-donating compounds including the alkoxysilane compound represented by the general formula (I) and the alkoxysilane compound represented by the general formula (II) → (α) the solid catalyst component → (β) the organoaluminum compound; and

(iv) (γ) the external electron-donating compounds including the alkoxysilane compound represented by the general formula (I) and the alkoxysilane compound represented by the general formula (II) → (β) the organoaluminum compound → (α) the solid catalyst component.

Among the contact examples (i) to (iv), the contact example (ii) is preferred.

In the contact examples (i) to (iv), the mark "→" means the order of contact. For example, "(α) the solid catalyst component for polymerization of an olefin → (β) the organoaluminum compound → (γ) the external electron-donating compounds including the alkoxysilane compound represented by the general formula (I) and the alkoxysilane compound represented by the general formula (II)" means that after addition and contact of (β) the organoaluminum compound into (α) the solid catalyst component, (γ) the external electron-donating compounds including the alkoxysilane compound represented by the general formula (I) and the alkoxysilane compound represented by the general formula (II) are added to and contacted with the mixture.

In the method for producing the catalyst for polymerization of an olefin according to the present invention, the solid catalyst component, the organoaluminum compound, the alkoxysilane compound represented by the general formula (I) and the alkoxysilane compound represented by the general formula (II) may be contacted in the absence of an olefin or in the presence of an olefin (in a polymerization system).

The contact among the solid catalyst component, the organoaluminum compound, the alkoxysilane compound represented by the general formula (I) and the alkoxysilane compound represented by the general formula (II) is preferably performed in an inert gas (argon, nitrogen, etc.) atmosphere or a monomer (propylene, etc.) atmosphere in order to prevent deterioration in the solid catalyst component or the catalyst for polymerization of an olefin after preparation or production.

The contact is also preferably performed in the presence of a dispersion medium such as an inert solvent in consideration of the easiness of operation. An aliphatic hydrocarbon compound such as hexane, heptane, or cyclohexane, an aromatic hydrocarbon compound such as benzene, toluene, xylene, or ethylbenzene, or the like is used as the inert solvent. Aliphatic hydrocarbon is more preferred. Among others, hexane, heptane or cyclohexane is more preferred.

The contact temperature for the contact among the components is preferably -10°C to 100°C, more preferably 0°C to 90°C, further preferably 20°C to 80°C. The contact time is preferably 1 minute to 10 hours, more preferably 10 minutes to 5 hours, further preferably 30 minutes to 2 hours.

The contact temperature and the contact time that fall within the ranges described above facilitate improving the polymerization activity of the catalyst for polymerization of an olefin and the stereoregularity of the resulting polymer, and consequently facilitate improving the mechanical properties, workability and productivity of the resulting olefin polymer.

The present invention can provide a method for conveniently producing a catalyst for polymerization of an olefin which is excellent in sustained polymerization activity in the polymerization of an $\alpha$-olefin and is capable of preferably producing an $\alpha$-olefin (co)polymer having high stereoregularity and MFR and favorable moldability.

Next, the method for producing a polymer of an olefin according to the present invention will be described.

The method for producing a polymer of an olefin according to the present invention comprises copolymerizing propylene and $\alpha$-olefin other than propylene in the presence of the catalyst for polymerization of an olefin according to the present invention.

In the case of copolymerizing propylene with another $\alpha$-olefin monomer, random copolymerization which involves polymerizing propylene and a small amount of ethylene as comonomers by one stage, or so-called propylene-ethylene block copolymerization which involves homopolymerizing propylene at a first stage (first polymerization vessel), and copolymerizing propylene with another $\alpha$-olefin such as ethylene by a second stage (second polymerization vessel) or a higher multiple stages (multistage polymerization vessel) is typical. The block copolymerization of propylene with another $\alpha$-olefin is preferred.

The block copolymer obtained by the block copolymerization is a polymer comprising continuously varying segments of two or more monomer compositions and refers to a form in which two or more types of polymer chains (segments) differing in polymer primary structure such as monomer species, comonomer species, comonomer composition, comonomer contents, comonomer sequences, or stereoregularity are connected in one molecule.

The olefin to be copolymerized is preferably $\alpha$-olefin having 2 to 20 carbon atoms (except for propylene having 3 carbon atoms). Specific examples thereof can include ethylene, 1-butene, 1-pentene, 4-methyl-1-pentene, and vinylcyclohexane. These olefins can be used singly or in combinations. The olefin to be copolymerized is preferably ethylene or 1-butene, particularly preferably ethylene.

In the method for producing a polymer of an olefin according to the present invention, the polymerization of the olefin may be performed in the presence or absence of an organic solvent.

The olefin to be polymerized can be used in any of gas and liquid states.

The polymerization of the olefin is performed, for example, under heating and increased pressure by introducing the olefin in the presence of the catalyst for polymerization of an olefin according to the present invention in a reactor such as an autoclave.

In the method for producing a polymer of an olefin according to the present invention, the polymerization temperature is usually 200°C or lower, preferably 100°C or lower, and from the viewpoint of improvement in activity or stereoregularity, is more preferably 60 to 100°C, further preferably 70 to 90°C, still further preferably 75 to 80°C. In the method for producing a polymer of an olefin according to the present invention, the polymerization pressure is preferably 10 MPa or lower, more preferably 6 MPa or lower, further preferably 5 MPa or lower.

The method for producing a polymer of an olefin according to the present invention can prepare, with high productivity, a polymer having excellent hydrogen activity and high stereoregularity and MFR even in homopolymerization at a relatively high temperature within the polymerization temperature range described above, and can also produce a copolymer that achieves excellent hydrogen activity and copolymerization activity even in copolymerization at a high temperature and is excellent in impact resistance.

Any of a continuous polymerization method and a batch polymerization method may be used. The polymerization reaction may be performed by one stage or may be performed by two or more stages.

In the method for producing a polymer of an olefin according to the present invention, the block copolymerization reaction of propylene with another $\alpha$-olefin can usually be carried out by using propylene alone or contacting propylene with a small amount of $\alpha$-olefin (ethylene, etc.) in the presence of the catalyst for polymerization of an olefin according to the present invention at a previous stage, and subsequently contacting propylene with $\alpha$-olefin (ethylene, etc.) at a later stage. The polymerization reaction at the previous stage may be carried out repetitively plural times, or the polymerization reaction at the later stage may be carried out repetitively plural times through multistage reaction.

Specifically, it is preferred that the block copolymerization reaction of propylene with another $\alpha$-olefin involves performing polymerization at the previous stage by using a polymerization temperature and time adjusted such that the ratio of a polypropylene moiety (to a copolymer to be finally obtained) is 20 to 90% by mass, and subsequently performing polymerization at the later stage by introducing propylene and ethylene or a different $\alpha$-olefin such that the ratio of a rubber moiety such as ethylene-propylene rubber (EPR) (to the copolymer to be finally obtained) is 10 to 80% by mass.

For both the previous stage and the later stage, the polymerization temperature is preferably 200°C or lower, more preferably 100°C or lower, further preferably 75 to 80°C, and the polymerization pressure is preferably 10 MPa or lower, more preferably 6 MPa or lower, further preferably 5 MPa or lower.

For the copolymerization reaction as well, any of a continuous polymerization method and a batch polymerization method can be adopted, and the polymerization reaction may be performed by one stage or may be performed by two or more stages.

The polymerization time (residence time in a reactor) is preferably 1 minute to 5 hours for the respective polymerization stages of the previous and later polymerization stages, or for continuous polymerization.

Examples of the polymerization method include a slurry polymerization method using a solvent of an inert hydrocarbon compound such as cyclohexane or heptane, a bulk polymerization method using a solvent such as liquefied propylene, and a vapor-phase polymerization method substantially using no solvent. A bulk polymerization method or a vapor-phase polymerization method is preferred. The reaction at the later stage is generally preferably vapor-phase polymerization reaction for the purpose of suppressing the elution of EPR from PP particles.

In the method for producing a polymer of an olefin according to the present invention, preliminary polymerization (hereinafter, appropriately referred to as pre-polymerization) may be performed prior to the polymerization of the olefin (hereinafter, appropriately referred to as main polymerization) by contacting a portion or the whole of the constituents of the catalyst for polymerization of an olefin according to the present invention with the olefin to be polymerized.

For the pre-polymerization, the order of contact of the constituents of the catalyst for polymerization of an olefin according to the present invention, and the olefin is arbitrary. Preferably, the organoaluminum compound is first charged into a pre-polymerization system set to an inert gas atmosphere or an olefin gas atmosphere, and subsequently, after contact of the solid catalyst component, one or more olefins such as propylene are contacted therewith. Alternatively, preferably, the organoaluminum compound is first charged into a pre-polymerization system set to an inert gas atmosphere or an olefin gas atmosphere, and subsequently, after contact of the external electron-donating compounds including the alkoxysilane compound represented by the general formula (I) and the alkoxysilane compound represented by the general formula (II), further the solid catalyst component and then one or more olefins such as propylene are contacted therewith.

For the pre-polymerization, the same olefin as in the main polymerization, or a monomer such as styrene can be used. The pre-polymerization conditions are also the same as the polymerization conditions described above.

The pre-polymerization improves catalyst activity and facilitates further improving the stereoregularity and particle properties, etc. of the resulting polymer.

The method for producing a polymer of an olefin according to the present invention can conveniently produce an $\alpha$-olefin (co)polymer having high stereoregularity and MFR and favorable moldability from an $\alpha$-olefin such as propylene.

Next, the propylene-$\alpha$-olefin copolymer according to the present invention will be described.

The propylene-$\alpha$-olefin copolymer according to the present invention is a product of copolymerization reaction of propylene and $\alpha$-olefin other than propylene in the presence of the catalyst for polymerization of an olefin according to the present invention.

The propylene-$\alpha$-olefin copolymer according to the present invention may be produced by the aforementioned method for producing a polymer of an olefin according to the present invention.

The propylene-$\alpha$-olefin copolymer according to the present invention contains a rubber moiety such as EPR (ethylene-propylene rubber) at a high percent content and also has a high block ratio, and can therefore easily exert excellent impact resistance.

[Examples]

Next, the present invention will be described further specifically with reference to Examples. However, these examples are given merely for illustration and do not limit the present invention.

(Production Example 1)

<Production of solid catalyst component (A-1)>

A flask (internal volume: 500 ml) equipped with a stirring apparatus and thoroughly purged at its inside with nitrogen gas was charged with 30 ml of titanium tetrachloride and 20 ml of toluene to form a mixed solution. Subsequently, a suspension formed using 10.0 g (87.4 mmol) of spherical diethoxy magnesium (degree of circularity: 1.10) having an average particle size of 32 $\mu$m, 50 ml of toluene and 3.6 ml of di-n-butyl phthalate was added into the mixed solution kept at a liquid temperature of 10°C.

Then, the liquid temperature was elevated from 10°C to 90°C, and the mixture was reacted with stirring at 90°C for 2 hours. After the completion of the reaction, the obtained solid product was washed four times with 100 ml of toluene of 90°C. 30 ml of titanium tetrachloride and 70 ml of toluene were newly added thereto, and the mixture was heated to 110°C and reacted with stirring at 110°C for 2 hours.

After the completion of the reaction, the obtained product was washed ten times with 100 ml of n-heptane of 40°C to obtain a solid catalyst component (A-1). The percent titanium content of this solid catalyst component was measured and was consequently 2.7% by weight.

(Production Example 2)

<Production of solid catalyst component (A-2)>

A solid catalyst component (A-2) was prepared in the same way as in Production Example 1 except that the internal electron-donating compound in Production Example 1 was changed from 3.6 ml (13.6 mmol) of di-n-butyl phthalate to 3.6 ml (13.6 mmol) of diethyl 2,3-diisopropylsuccinate.

The percent titanium content of the obtained solid catalyst component was 3.2% by weight.

(Example 1)

<Preparation of polymerization catalyst and propylene polymerization>

An autoclave (internal volume: 2.0 L) with a stirrer thoroughly purged with nitrogen gas was charged with 1.32 mmol of triethyl aluminum, 0.125 mmol of n-hexyltriethoxysilane (NHTES) as the first external electron-donating compound and 0.007 mmol of dicyclopentyldimethoxysilane (DCPDMS) as the second external electron-donating compound, and then with 0.00264 mmol (in terms of a titanium atom) of the solid catalyst component (A-1) to form a catalyst for polymerization of an olefin.

In this respect, the quantitative ratios of the first external electron-donating compound and the second external electron-donating compound with respect to the total amount of the first external electron-donating compound and the second external electron-donating compound were 95% by mol and 5% by mol, respectively.

Subsequently, the autoclave was charged with 4.0 L of hydrogen gas and 1.4 L of liquefied propylene, and pre-polymerization was performed at 20°C for 5 minutes. Then, the autoclave was heated to 70°C, and polymerization reaction was performed at 70°C for 1 hour to obtain a propylene polymer.

The polymerization activity per g of the solid catalyst component was 50,600 (g-pp/g-cat) according to the expression given below.

The melt rheology (MFR) of the polymer and the ratio of p-xylene solubles (XS) in the polymer were measured as to the obtained propylene polymer. The results are shown in Table 1.

<Propylene polymerization activity>

Propylene polymerization activity (g-pp/g-catalyst) = Mass (g) of polypropylene / Mass (g) of the solid catalyst component in the catalyst for polymerization of an olefin

<Melt rheology (MFR) of polymer>

The melt flow rate (MFR) (g/10 min) indicating the melt rheology of the polymer was measured in accordance with ASTM D 1238 and JIS K 7210.

<Ratio of p-xylene solubles (XS) in polymer>

A flask equipped with a stirring apparatus was charged with 4.0 g of the polymer (polypropylene) and 200 ml of p-xylene, and the outside temperature was set to the boiling point or higher (approximately 150°C) of xylene, thereby dissolving the polymer over 2 hours while keeping the temperature of p-xylene inside the flask at the boiling point (137 to 138°C). Then, the liquid temperature was cooled to 23°C over 1 hour, and an insoluble component and a soluble component were separated by filtration. The solution of the soluble component was collected, and p-xylene was distilled off by heating and drying under reduced pressure. The weight of the obtained residue was determined, and a relative ratio (% by mass) to the formed polymer (polypropylene) was calculated and used for xylene solubles (XS).

(Example 2)

Polymerization catalyst formation, propylene polymerization and evaluation of the obtained propylene polymer were performed in the same way as in Example 1 except that the first external electron-donating compound n-hexyltriethoxysilane (NHTES) was changed to the same mol thereas of n-octyltriethoxysilane (NOTES).

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 1.

(Comparative Example 1)

Polymerization catalyst, formation, propylene polymerization and evaluation of the obtained propylene polymer were performed in the same way as in Example 1 except that: the amount of the first external electron-donating compound n-hexyltriethoxysilane (NHTES) used was changed from 0.118 mmol to 0.131 mmol; and the second external electron-donating compound dicyclopentyldimethoxysilane (DCPDMS) was not added.

In this respect, the quantitative ratios of the first external electron-donating compound and the second external electron-donating compound with respect to the total amount of the first external electron-donating compound and the second external electron-donating compound were 100% by mol and 0% by mol, respectively.

The results are shown in Table 1.

(Comparative Example 2)

Polymerization catalyst formation, propylene polymerization and evaluation of the obtained propylene polymer were performed in the same way as in Example 1 except that 0.118 mmol of the first external electron-donating compound n-hexyltriethoxysilane (NHTES) was changed to the same mol thereas of propyltriethoxysilane (PTES) .

In this respect, the quantitative ratios of PTES and DCPDMS with respect to the total amount of PTES and DCPDMS were 95% by mol and 5% by mol, respectively.

The results are shown in Table 1.

(Example 3)

Polymerization catalyst formation, propylene polymerization and evaluation of the obtained propylene polymer were performed in the same way as in Example 1 except that the same amount of the solid catalyst component (A-2) as that of the solid catalyst component (A-1) was used instead thereof.

The results are shown in Table 1.

(Comparative Example 3)

Polymerization catalyst formation, propylene polymerization and evaluation of the obtained propylene polymer were performed in the same way as in Comparative Example 1 except that the same amount of the solid catalyst component (A-2) as that of the solid catalyst component (A-1) was used instead thereof.

In this respect, the quantitative ratios of the first external electron-donating compound and the second external electron-donating compound with respect to the total amount of the first external electron-donating compound and the second external electron-donating compound were 100% by mol and 0% by mol, respectively.

The results are shown in Table 1.

(Example 4)

Polymerization catalyst formation, propylene polymerization and evaluation of the obtained propylene polymer were performed in the same way as in Example 1 except that: the amount of the first external electron-donating compound n-hexyltriethoxysilane (NHTES) used was changed from 0.125 mmol to 0.188 mmol; and the amount of the second external electron-donating compound dicyclopentyldimethoxysilane (DCPDMS) used was changed from 0.007 mmol to 0.010 mmol.

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 1.

(Example 5)

Polymerization catalyst formation, propylene polymerization and evaluation of the obtained propylene polymer were performed in the same way as in Example 1 except that: 0.127 mmol of the first external electron-donating compound n-hexyltriethoxysilane (NHTES) was changed to 0.188 mmol; and 0.007 mmol of the second external electron-donating compound dicyclopentyldimethoxysilane (DCPDMS) was changed to 0.010 mmol of diisopropyldimethoxysilane (DIPDMS).

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 1.

(Example 6)

Polymerization catalyst formation, propylene polymerization and evaluation of the obtained propylene polymer were performed in the same way as in Example 1 except that: 0.125 mmol of the first external electron-donating compound n-hexyltriethoxysilane (NHTES) was changed to 0.188 mmol of n-octyltriethoxysilane (NOTES); and the amount of the second external electron-donating compound dicyclopentyldimethoxysilane (DCPDMS) used was changed from 0.007 mmol to 0.010 mmol.

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 1.

[Table 1]

| Test Example | Propylene polymerization activity | MFR | XS |
|---|---|---|---|
| | (g-pp/g-cat) | (g/10min.) | (% by mass) |
| Example 1 | 50,600 | 83 | 1.4 |
| Example 2 | 53,100 | 89 | 1.5 |
| Comparative Example 1 | 48,000 | 230 | 2.2 |
| Comparative Example 2 | 48,600 | 63 | 1.9 |
| Example 3 | 48,700 | 76 | 1.5 |
| Comparative Example 3 | 44,300 | 200 | 2.4 |
| Example 4 | 53,900 | 86 | 1.2 |
| Example 5 | 49,200 | 110 | 1.6 |
| Example 6 | 51,500 | 120 | 1.7 |

As is evident from Table 1, the polymers obtained by using the catalyst for polymerization of an olefin containing two types of alkoxysilane compounds having specific structures at specific quantitative ratios in Example 1 to Example 6 had high MFR and also maintained low XS and high stereoregularity and can therefore produce a molded product having excellent melt moldability and favorable mechanical strength.

On the other hand, as is evident from Table 1, the polymers obtained in Comparative Example 1 to Comparative Example 3 had low MFR (Comparative Example 2) or had high XS and poor stereoregularity and crystallinity (Comparative Example 1) because their catalysts for polymerization of an olefin did not contain the two types of alkoxysilane compounds having specific structures at the specific quantitative ratios (Comparative Example 1 and Comparative Example 3) or contained an alkoxysilane compound lacking the specific structure (Comparative Example 2).

(Example 7)

<Preparation of polymerization catalyst and ethylene-propylene copolymerization>

An autoclave (internal volume: 2.0 L) with a stirrer thoroughly purged with nitrogen gas was charged with 2.4 mmol of triethyl aluminum, 0.228 mmol of n-hexyltriethoxysilane (NHTES) as the first external electron-donating compound, 0.012 mmol of dicyclopentyldimethoxysilane (DCPDMS) as the second external electron-donating compound and 6 mg of the solid catalyst component (A-1) obtained as described above to prepare a catalyst for polymerization of an olefin (ethylene-propylene copolymerization catalyst).

In this respect, the quantitative ratios of the first external electron-donating compound and the second external electron-donating compound with respect to the total amount of the first external electron-donating compound and the second external electron-donating compound were 95% by mol and 5% by mol, respectively.

Subsequently, the autoclave with a stirrer containing the catalyst for polymerization of an olefin (ethylene-propylene copolymerization catalyst) thus prepared was charged with 15 mol (1.2 L) of liquefied propylene and 0.2 MPa (partial pressure) of hydrogen gas, and pre-polymerization was performed at 20°C for 5 minutes. Then, the autoclave was heated, and propylene polymerization reaction at the first stage (homo stage) was performed at 70°C for 75 minutes. Then, the pressure was brought back to normal pressure. Subsequently, the autoclave (reactor) was purged with nitrogen, and the weight of the autoclave was measured. An aliquot of the formed polymer was collected, and the polymerization activity (homo activity) (g-PP/g-cat) of the polymerization at the first stage (homo stage) was calculated by subtracting the tare mass of the autoclave from the weight of the autoclave thus measured, and dividing the resulting value (g) by the amount of the solid catalyst component used (g). Also, the MFR of the collected aliquot of the polymer was measured.

Subsequently, piping was connected to the autoclave after the weight measurement, and ethylene and propylene were added into the autoclave (reactor) such that the ethylene/propylene molar ratio was 1.0/1.0. Then, the autoclave was heated to 70°C, and ethylene, propylene and hydrogen were reacted under conditions of 1.2 MPa, 70°C, and 60 minutes while introduced such that the amounts of their gases supplied per minute (L/min) were at an ethylene/propylene/hydrogen ratio of 2/2/0.086 to obtain an ethylene-propylene copolymer.

The ethylene-propylene block copolymerization activity (ICP activity), MFR, block ratio (CV), percent EPR content and ethylene content (in EPR components and in xylene insolubles) of the obtained ethylene-propylene copolymer were measured by the methods given below.

The results are shown in Table 2.

<Ethylene-propylene block copolymerization activity (ICP activity) (g-ICP/(g-cat))>

The ethylene-propylene block copolymerization activity (ICP activity) during the ethylene-propylene block copolymerization per g of the solid catalyst component was calculated according to the following expression:

$$\text{ICP activity (g-ICP/(g-cat))} = (I + J - F) / (\text{Mass (g) of the solid catalyst component contained in the catalyst for ethylene-propylene copolymerization)}$$

wherein F represents the mass (g) of the autoclave, I represents the mass (g) of the autoclave after the completion of the copolymerization reaction, and J represents the amount (g) of the aliquot of the polymer extracted after the homopolymerization.

<Block ratio (CV)>

The block ratio of the ethylene-propylene copolymer was determined according to the following expression:

$$\text{Block ratio (\% by mass)} = \{(I - G + J) / (I - F)\} \times 100$$

wherein F represents the mass (g) of the autoclave, G represents the mass (g) of the autoclave after the removal of unreacted monomers after the completion of the polymerization at the first stage (homo stage), I represents the mass (g) of the autoclave after the completion of the copolymerization reaction, and J represents the amount (g) of the aliquot of the polymer extracted after the homopolymerization.

<Percent EPR content (Xylene-soluble content in ethylene-propylene block copolymer)>

A flask equipped with a stirring apparatus was charged with 5.0 g of the copolymer (ethylene-propylene block copolymer) and 250 ml of p-xylene, and the outside temperature was set to the boiling point or higher (approximately 150°C) of xylene, thereby dissolving the polymer over 2 hours while keeping the temperature of p-xylene inside the flask at the boiling point (137 to 138°C). Then, the liquid temperature was cooled to 23°C over 1 hour, and xylene solubles (EPR) and xylene insolubles (XI) were separated by filtration.

The solubles were collected, together with the solution, and p-xylene was distilled off by heating and drying under reduced pressure. The weight of the obtained residue was determined, and a relative ratio (% by mass) to the formed polymer (ethylene-propylene block copolymer) was calculated and used as the percent EPR content.

<Percent ethylene content (in xylene solubles (EPR) and in xylene insolubles (XI))>

The percent ethylene content in EPR was determined by sampling a small amount of the xylene solubles (EPR) obtained by xylene extraction in the percent EPR content measurement operation described above, molding the sample into a film with a hot press, and then using the film thickness and absorbance measured using a Fourier transform infrared spectroscopy apparatus (FT-IR) (manufactured by Thermo Fisher Scientific Inc., Nicolet, Avatar) to calculate the percent ethylene content on the basis of a calibration curve prepared from a plurality of samples having a known content.

The percent ethylene content in xylene insolubles (XI) was determined by sampling a small amount of the xylene insolubles (XI) obtained by xylene extraction in the percent EPR content measurement operation described above, molding the sample into a film with a hot press, and then calculating the percent ethylene content in the same way as in the percent ethylene content in EPR described above.

(Example 8)

Ethylene-propylene copolymerization catalyst formation, ethylene-propylene copolymerization and evaluation of the obtained ethylene-propylene copolymer were performed in the same way as in Example 7 except that: the amount of the n-hexyltriethoxysilane (NHTES) used was changed from 0.228 mmol to 0.342 mmol; and the amount of the dicyclopentyldimethoxysilane (DCPDMS) used was changed from 0.012 mmol to 0.018 mmol.

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 2.

(Example 9)

Ethylene-propylene copolymerization catalyst formation, ethylene-propylene copolymerization and evaluation of the obtained ethylene-propylene copolymer were performed in the same way as in Example 7 except that the second external electron-donating compound was changed from dicyclopentyldimethoxysilane (DCPDMS) to the same mol thereas of diisopropyldimethoxysilane (DIPDMS).

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 2.

(Example 10)

Ethylene-propylene copolymerization catalyst formation, ethylene-propylene copolymerization and evaluation of the obtained ethylene-propylene copolymer were performed in the same way as in Example 7 except that the first external electron-donating compound was changed from n-hexyltriethoxysilane (NHTES) to the same mol thereas of n-octyltriethoxysilane (NOTES).

In this respect, the quantitative ratios of the first external electron-donating compound and the second external electron-donating compound with respect to the total amount of the first external electron-donating compound and the second external electron-donating compound were 95% by mol and 5% by mol, respectively).

The results are shown in Table 2.

(Example 11)

Ethylene-propylene copolymerization catalyst formation, ethylene-propylene copolymerization and evaluation of the obtained ethylene-propylene copolymer were performed in the same way as in Example 7 except that the same amount of the solid catalyst component (A-2) as 6 mg of the solid catalyst component (A-1) was used instead thereof.

The results are shown in Table 2.

(Comparative Example 4)

Ethylene-propylene copolymerization catalyst formation, ethylene-propylene copolymerization and evaluation of the obtained ethylene-propylene copolymer were performed in the same way as in Example 7 except that: the amount of the n-hexyltriethoxysilane (NHTES) used was changed from 0.216 mmol to 0.240 mmol; and the second external electron-donating compound dicyclopentyldimethoxysilane (DCPDMS) was not added.

In this respect, the quantitative ratios of the first external electron-donating compound and the second external electron-donating compound with respect to the total amount of the first external electron-donating compound and the second external electron-donating compound were 100% by mol and 0% by mol, respectively.

The results are shown in Table 2.

(Comparative Example 5)

Ethylene-propylene copolymerization catalyst formation, ethylene-propylene copolymerization and evaluation of the obtained ethylene-propylene copolymer were performed in the same way as in Example 7 except that: the first external electron-donating compound was not added; and the amount of the dicyclopentyldimethoxysilane (DCPDMS) used was changed from 0.024 mmol to 0.240 mmol.

In this respect, the quantitative ratios of the first external electron-donating compound and the second external electron-donating compound with respect to the total amount of the first external electron-donating compound and the second external electron-donating compound were 0% by mol and 100% by mol, respectively.

The results are shown in Table 2.

(Comparative Example 6)

Ethylene-propylene copolymerization catalyst formation, ethylene-propylene copolymerization and evaluation of the obtained ethylene-propylene copolymer were performed in the same way as in Example 7 except that the first external electron-donating compound was changed from 0.216 mmol of n-hexyltriethoxysilane (NHTES) to the same mol thereas of propyltriethoxysilane (PTES).

In this respect, the quantitative ratios of the first external electron-donating compound and the second external electron-donating compound with respect to the total amount of the first external electron-donating compound and the second external electron-donating compound were 95% by mol and 5% by mol, respectively.

The results are shown in Table 2.

In Table 2, the sum of the homo-stage polymerization activity and the ethylene-propylene block copolymerization activity (ICP activity) is also shown as total polymerization activity.

[Table 2]

| | Homo-stage polymerization activity (g-pp/g-cat) | Homo-stage MFR (g/10min.) | ICP activity (g-ICP/g-cat) | Copolymer MFR (g/10min.) | Total polymerization activity (g-pp/g-cat) + (g-ICP/g-cat) | Block ratio (wt%) | EPR (wt%) | Percent ethylene content | |
|---|---|---|---|---|---|---|---|---|---|
| | | | | | | | | In EPR (wt%) | In XI (wt%) |
| Example 7 | 58,800 | 43 | 9,900 | 18 | 68,700 | 14.4 | 13.0 | 44.6 | 4.8 |
| Example 8 | 56,100 | 71 | 10,100 | 24 | 66,200 | 15.3 | 12.4 | 45.1 | 4.7 |
| Example 9 | 54,600 | 84 | 11,500 | 30 | 66,100 | 17.4 | 13.5 | 46.6 | 4.6 |
| Example 10 | 53,300 | 73 | 12,000 | 33 | 65,300 | 18.4 | 14.3 | 44.2 | 3.8 |
| Example 11 | 46,500 | 45 | 9,900 | 14 | 56,400 | 17.6 | 14.4 | 40.4 | 3.8 |
| Comparative Example 4 | 43,200 | 250 | 7,300 | 49 | 50,500 | 14.5 | 12.7 | 48.4 | 5.3 |
| Comparative Example 5 | 76,200 | 10 | 21,300 | 3.3 | 97,500 | 21.9 | 18.4 | 38.5 | 3.7 |
| Comparative Example 6 | 49,700 | 34 | 7,800 | 13 | 57,500 | 13.6 | 10.7 | 41.8 | 4.4 |

As is evident from Table 2, use of the catalyst for olefin copolymerization containing two types of alkoxysilane compounds having specific structures at specific quantitative ratios in Example 7 to Example 11 exhibited excellent polymerization activity and sustained polymerization activity during polymerization reaction because of high polymerization activity during both homopolymerization and copolymerization and also high total polymerization activity, and furthermore, the resulting copolymer had high MFR and a high ethylene content and block ratio and can therefore produce a molded product having excellent melt moldability and favorable mechanical strength.

On the other hand, as is evident from Table 2, in Comparative Example 4 to Comparative Example 6, both polymerization activity and sustained polymerization activity during polymerization were poor (Comparative Example 4 and Comparative Example 6), or the MFR of the resulting polymer was low (Comparative Example 5), due to low polymerization activity during both homopolymerization and copolymerization and also low total polymerization activity, because their catalysts for polymerization of an olefin did not contain the two types of alkoxysilane compounds having specific structures at the specific quantitative ratios (Comparative Example 4 and Comparative Example 5) or contained an alkoxysilane compound lacking the specific structure (Comparative Example 6).

[Industrial Applicability]

The present invention can provide a catalyst for polymerization of an olefin which is excellent in sustained polymerization activity in the polymerization of an $\alpha$-olefin and is capable of preferably producing an $\alpha$-olefin (co)polymer having high stereoregularity and MFR and favorable moldability, and can provide a method for producing the catalyst for polymerization of an olefin, a method for producing a polymer of an olefin and a propylene-$\alpha$-olefin copolymer.

**Claims**

1. A catalyst for polymerization of an olefin, comprising:

   a solid catalyst component containing magnesium, titanium, halogen and an internal electron-donating compound;
   an organoaluminum compound;
   an external electron-donating compound represented by the following general formula (I):

   $$R^1Si(OR^2)_3 \qquad (I)$$

   wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms; and
   an external electron-donating compound represented by the following general formula (II):

   $$(R^3R^4N)_n(R^5HN)_pSiR^6_q(OR^7)_r \qquad (II)$$

   wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; $n + p + q + r = 4$; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other, wherein
   the catalyst for polymerization of an olefin comprises 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II).

2. A method for producing a catalyst for polymerization of an olefin according to claim 1, comprising contacting a solid catalyst component containing magnesium, titanium, halogen and an internal electron-donating compound, an organoaluminum compound,

an external electron-donating compound represented by the following general formula (I):

$$R^1Si(OR^2)_3 \qquad (I)$$

wherein the $R^1$ group is a linear or branched alkyl group having 6 to 12 carbon atoms or a cycloalkyl group having 6 to 12 carbon atoms; and the $R^2$ group is a linear alkyl group having 2 to 4 carbon atoms, and
an external electron-donating compound represented by the following general formula (II):

$$(R^3R^4N)_n(R^5HN)_pSiR^6q(OR^7)_r \qquad (II)$$

wherein the $R^3$, $R^4$ and $R^5$ groups are each a linear alkyl group having 1 to 12 carbon atoms, a branched alkyl group having 3 to 12 carbon atoms or a cycloalkyl group having 3 to 12 carbon atoms; the $R^3$, $R^4$ and $R^5$ groups are the same as or different from each other; the $R^6$ group is a linear alkyl group having 1 to 10 carbon atoms, a branched alkyl group having 3 to 10 carbon atoms or a cycloalkyl group having 3 to 12 carbon atoms; the $R^7$ group is a methyl group or an ethyl group; n is a real number of 0 to 2; p is a real number of 0 to 2; q is a real number of 0 to 3; r is a real number of 0 to 4; $n + p + q + r = 4$; when a plurality of $R^3R^4N$ groups are present, these $R^3R^4N$ groups are the same as or different from each other; when a plurality of $R^5HN$ groups are present, these $R^5HN$ groups are the same as or different from each other; when a plurality of $R^6$ groups are present, these $R^6$ groups are the same as or different from each other; and when a plurality of $OR^7$ groups are present, these $OR^7$ groups are the same as or different from each other,
with each other so as to attain 51 to 99% by mol of the external electron-donating compound represented by the general formula (I) and 1 to 49% by mol of the external electron-donating compound represented by the general formula (II) with respect to the total amount of the external electron-donating compound represented by the general formula (I) and the external electron-donating compound represented by the general formula (II).

3. A method for producing a polymer of an olefin, comprising copolymerizing propylene and α-olefin other than propylene in the presence of the catalyst for polymerization of an olefin according to claim 1.

4. A propylene-α-olefin copolymer being a product of copolymerization reaction of propylene and α-olefin other than propylene in the presence of the catalyst for polymerization of an olefin according to claim 1.

## INTERNATIONAL SEARCH REPORT

| International application No. |
| --- |
| PCT/JP2018/030103 |

A.   CLASSIFICATION OF SUBJECT MATTER
Int. Cl. C08F4/654(2006.01)i, C08F210/06(2006.01)i

According to International Patent Classification (IPC) or to both national classification and IPC

B.   FIELDS SEARCHED

Minimum documentation searched (classification system followed by classification symbols)
Int. Cl. C08F4/00-4/82, C08F210/00-210/18

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X | JP 2013-147601 A (SUMITOMO CHEMICAL CO., LTD.) 01 August 2013, claims 1, 5-7, paragraphs [0015]-[0030], [0093]-[0099], production examples 1, 3 & CN 103289210 A | 1-4 |
| X | JP 2011-184538 A (SUMITOMO CHEMICAL CO., LTD.) 22 September 2011, claims 1-4, paragraphs [0020]-[0022], [0038], examples 4, 5, table 1 (Family: none) | 1-4 |
| X | JP 2010-168546 A (SUMITOMO CHEMICAL CO., LTD.) 05 August 2010, claims 1-5, paragraphs [0046]-[0048], [0064]-[0067], examples 8, 9, tables 1, 2 & DE 102009060196 A & CN 101792550 A | 1-4 |

☒   Further documents are listed in the continuation of Box C.          ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05.10.2018 | 23.10.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/030103 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2013-216772 A (SUMITOMO CHEMICAL CO., LTD.) 24 October 2013, claims 2, 6-8, paragraphs [0015]-[0018], [0154]-[0169], production examples 1, 2, 4, table 1 (Family: none) | 1-4 |
| X | JP 2011-184537 A (SUMITOMO CHEMICAL CO., LTD.) 22 September 2011, claims 1-5, paragraphs [0072]-[0075], [0088]-[0093], examples 1, 2, 4, 5, 7-9, 12, tables 1, 2 (Family: none) | 1-4 |
| X | JP 2013-216730 A (SUMITOMO CHEMICAL CO., LTD.) 24 October 2013, claims 2, 4-8, paragraphs [0120]-[0134], examples 1-6, comparative examples 1-3, table 1 (Family: none) | 1, 2 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3174112 A
- JP 58041832 A
- JP 62051633 A
- JP 3074341 A
- JP 4368391 A
- JP 8073388 A